(19) Europäisches Patentamt
European Patent Office
Office européen des brevets

(11) **EP 4 094 203 B1**

(12) **EUROPEAN PATENT SPECIFICATION**

(45) Date of publication and mention
of the grant of the patent:
**06.03.2024 Bulletin 2024/10**

(21) Application number: **21700611.3**

(22) Date of filing: **21.01.2021**

(51) International Patent Classification (IPC):
**G06N 10/40** *(2022.01)*

(52) Cooperative Patent Classification (CPC):
**G06N 10/40**

(86) International application number:
**PCT/EP2021/051397**

(87) International publication number:
**WO 2021/148574 (29.07.2021 Gazette 2021/30)**

(54) **CONTROLLING COUPLINGS BETWEEN QUANTUM DOTS IN A QUANTUM DOT ARRAY**

STEUERUNG VON KOPPLUNGEN ZWISCHEN QUANTENPUNKTEN IN EINER QUANTENPUNKTANORDNUNG

COMMANDE DE COUPLAGES ENTRE POINTS QUANTIQUES DANS UN RÉSEAU DE POINTS QUANTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2020 NL 2024724**

(43) Date of publication of application:
**30.11.2022 Bulletin 2022/48**

(73) Proprietor: **Technische Universiteit Delft**
**2628 CN Delft (NL)**

(72) Inventors:
• **VAN DIEPEN, Cornelis Jacobus**
**2600 AA Delft (NL)**
• **HSIAO, Tzu-Kan**
**2600 AA Delft (NL)**
• **VANDERSYPEN, Lieven Mark Koenraad**
**2600 AA Delft (NL)**

(74) Representative: **De Vries & Metman**
**Overschiestraat 180**
**1062 XK Amsterdam (NL)**

(56) References cited:
• **HAIFENG QIAO ET AL: "Coherent multi-spin exchange in a quantum-dot spin chain", ARXIV.ORG, CORNELL UNIVERSITY LIBRARY, 201 OLIN LIBRARY CORNELL UNIVERSITY ITHACA, NY 14853, 7 January 2020 (2020-01-07), XP081574409,**
• **VOLK C ET AL: "Loading a quantum-dot based "Qubyte" register", ARXIV.ORG, CORNELL UNIVERSITY LIBRARY, 201 OLIN LIBRARY CORNELL UNIVERSITY ITHACA, NY 14853, 2 January 2019 (2019-01-02), XP081010757,**
• **JULIAN D. TESKE ET AL: "A machine learning approach for automated fine-tuning of semiconductor spin qubits", APPLIED PHYSICS LETTERS, vol. 114, no. 13, April 2019 (2019-04), page 133102, XP055736627, US ISSN: 0003-6951, DOI: 10.1063/1.5088412**
• **VAN DIEPEN C J ET AL: "Automated tuning of inter-dot tunnel coupling in double quantum dots", APPLIED PHYSICS LETTERS, A I P PUBLISHING LLC, US, vol. 113, no. 3, 16 July 2018 (2018-07-16) , XP012230026, ISSN: 0003-6951, DOI: 10.1063/1.5031034 [retrieved on 2018-07-16] cited in the application**

**Description**

Field of the invention

The invention relates to controlling couplings between quantum dots in a quantum dot array, and, in particular, though not exclusively, to methods and systems for controlling couplings between quantum dots in a quantum dot array and a computer program product for executing such methods.

Background of the invention

Electrostatically-defined semiconductor quantum dot arrays have great application potential in spin-qubit quantum computation and quantum simulation. In these arrays, the chemical potentials of dots and the tunnel coupling between neighbouring dots are controlled electrostatically by gate voltages. By adjusting the dot potentials and tunnel couplings, the exchange coupling between electron spins in the quantum dots can be tuned to perform spin-qubit operations. In addition, the in-situ control of the parameters make quantum dot arrays a suitable platform for analog quantum simulation of Fermi-Hubbard physics, such as the Mott metal-to-insulator transition, Nagaoka ferromagnetism, Heisenberg spin chain, and D-wave superconductivity in the ladder materials.

Due to crosstalk, caused by capacitive coupling between gates and the quantum dot array, changing one gate voltage, does not change one but multiple parameters. Therefore, iterative adjustments of gate voltages are needed to reach the target values. To compensate for the crosstalk on the chemical potentials of the quantum dots, a set of virtual gates is defined as linear combinations of physical gate voltages to enable orthogonal control of chemical potentials of the quantum dots. The technique of crosstalk compensation for dot potentials has become a standard and essential technique in multi-dot experiments. At the same time, the crosstalk compensation for tunnel couplings is rarely performed in quantum dot devices.

The inter-dot tunnel coupling is approximately an exponential function of gate voltages. This exponential behaviour makes the crosstalk effect nonlinear and more difficult to calibrate. So far, tuning of multiple tunnel couplings in a multi-dot device is mostly done by iteratively adjusting gate voltages using manual or computer-automated procedures, examples of such procedures are described in the article of Van Diepen, C. J. et al. Automated tuning of inter-dot tunnel coupling in double quantum dots, Applied Physics Letters 113, 033101 (2018) and the article by Mills, A. R. et al. Computer-automated tuning procedures for semiconductor quantum dot arrays. Applied Physics Letters 115, 113501 (2019). These tuning methods include the selection of a target tunnel coupling configuration for a quantum dot and the determination of an initial set of barrier voltages based on the target tunnel coupling configuration. Thereafter, tunnel coupling strengths of each of the tunnel barriers in the quantum dot array are measured and compared with the target values. Based on the comparison, the barrier voltages are updated and the process is repeated until the measured coupling strengths approach the target values within a certain error margin.

This iterative process needs to be repeated for each target settings and thus is not suitable for fast individual control of tunnel couplings in a quantum dot array. Hence, from the above it follows there is a need in the art for improved schemes for controlling tunnel couplings in a quantum dot array. In particular, there is a need in the art for improved systems and method for controlling tunnel couplings in a quantum dot array.

The paper "Coherent multi-spin exchange in a quantum-dot spin chain" by Haifeng Qiao et al. discloses simultaneous, coherent exchange coupling between all nearest-neighbor pairs of spins in a quadruple quantum dot. This paper discloses two models for predicting the confinement gate voltages for a desired set of exchange couplings in order to achieve simultaneous and independent control of all three exchange couplings in a quadruple quantum dot.

The paper "Loading a quantum-dot based "Qubyte" register" by C. Volk et al. discloses a method for systematically adding quantum dots to an array one dot at a time, in such a way that the number of electrons on previously formed dots is unaffected. The method allows individual control of the number of electrons on each of the dots, as well as of the interdot tunnel rates. This technique is used to tune up a linear array of eight GaAs quantum dots such that they are occupied by one electron each.

Summary of the invention

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In this application, methods and systems for controlling tunnel couplings in an array of quantum dots are described.

In a first aspect of the invention, a computer-implemented method of controlling coupling of at least two quantum dots in a quantum dot array comprises determining dot potential crosstalk ratios of physical gates coupling to dot potentials of quantum dots in the quantum dot array, the dot potential crosstalk ratios defining of a dot potential crosstalk matrix, the inverse of the dot potential crosstalk matrix defining virtual gates as a linear combination of the physical gates for orthogonal control of the dot potentials, wherein determining the dot potential crosstalk ratios include: controlling a controller of the quantum dot array to apply a voltage to one of the physical gates and to measure cross-talk effects of the applied voltage to the dot potentials of the quantum dots and calculate the ratios between cross-talk effects from different physical gates, determining coupling crosstalk ratios of the virtual gates coupling to dot couplings between one or more pairs of quantum dots in the quantum dot array, the coupling crosstalk ratios defining elements of a coupling crosstalk matrix, the inverse of the coupling crosstalk matrix defining enhanced virtual gates as a linear combination of the virtual gates for orthogonal control of the dot couplings, wherein the coupling crosstalk ratios are determined based on the ratios of partial derivatives of dot couplings between pairs of quantum dots in the quantum dot array with respect to the virtual gate voltages, the determining of a partial derivative including: controlling the controller to apply a voltage perturbation to at least one of the virtual gates, while keeping the voltages on the other virtual gates constant and, in response to the voltage perturbation, to measure a change of the dot coupling of a pair of quantum dots and fitting the change of the dot coupling to a linear function, and controlling the controller based on the enhanced virtual gates, the controlling including using the at least one of the enhanced virtual gates for applying a linear combination of gate voltages to the physical gates to tune the coupling of the at least two quantum dots to a target value.

In an embodiment, the method may comprise at least one or more of the steps of: determining virtual gates $B'$, $P'$ for the quantum dots based on first crosstalk contributions of physical gates $B$, $P$ to dot potentials of quantum dots in the quantum dot array, a virtual gate voltage defining a linear combination of physical gate voltages to be applied to the physical gates for controlling at least one dot potential of a quantum dot or for controlling a coupling of at least two quantum dots in the quantum dot array, while at least partially compensating dot potential crosstalk due to the first crosstalk contributions; determining second crosstalk contributions of the virtual gates to a coupling of at least two quantum dots in the quantum dot array, the determining including applying a voltage perturbation $\delta$ to at least one of the virtual gates and in response to the voltage perturbation $\delta$ measuring a change in of the coupling of the at least two quantum dots and fitting the change of the coupling to a function, preferably a linear function; determining enhanced virtual gates $B^{\dagger}$, $P^{\dagger}$ for the quantum dots based on the second crosstalk contributions, an enhanced virtual gate voltage defining a linear combination of the virtual gate voltages for controlling at least one dot potential or a coupling of at least two quantum dots in the quantum dot array, while at least partially compensating coupling crosstalk due to the second crosstalk contributions; and, controlling the coupling of at least two quantum dots in the quantum dot array based on at least one of the enhanced virtual gates $B^{\dagger}$, $P^{\dagger}$, the controlling including using the at least one of the enhanced virtual gates to tune the coupling of the at least two quantum dots to a target value.

The control method enables orthogonal control of coupling between quantum dots in a quantum dot array, typically a gated quantum dot array. The inventors found out that despite the exponential dependence of coupling, ratios between crosstalk factors in the exponent of the coupling (which may be referred to as coupling crosstalk ratios) may be efficiently be obtained from the derivatives of couplings, e.g. tunnel couplings, with respect to virtual gate voltages. These coupling crosstalk ratios may be used to defines a new set of virtual gates, which includes the crosstalk compensation for the couplings. These new set of virtual gates that allow crosstalk compensation allows enhanced control of the quantum dot array and therefore may be referred to as enhanced virtual gates. The enhanced virtual gates allow efficient orthogonal control of couplings in quantum dots. In addition, even though the couplings scale exponentially with the corresponding virtual gates, the control remains orthogonal over a wide range of tunnel coupling values, since the scheme compensates for the crosstalk in the exponential dependence rather than just linearize the crosstalk.

In an embodiment, the coupling of the at least two quantum dots may be at least one of: a tunnel coupling, a co-tunnelling coupling, an exchange coupling parameter and/or a capacitive coupling. Hence, the control schemes described by the embodiments in this application may be used to control different types of couplings that may exist between quantum dots in a quantum dot array.

In an embodiment, fitting the change in the coupling to a function may include: determining a ratio between a change of a dot coupling and the voltage perturbation $\delta$, the ratio defining at least one of the second crosstalk contributions.

In an embodiment, the first crosstalk contributions may define elements of a dot potential crosstalk matrix C defining virtual gates P',B' for orthogonal control of the dot potentials as a linear combination of the physical gates P,B.

In an embodiment, the second crosstalk contributions may define elements of a coupling crosstalk matrix T defining enhanced virtual gates $P^\dagger,B^\dagger$ for orthogonal control of a coupling of at least two quantum dots as a linear combination of the virtual gates P',B'.

In an embodiment, the determining enhanced virtual gates $B^\dagger, P^\dagger$ may further include: determining a combined crosstalk matrix based on the dot potential crosstalk matrix C and the coupling crosstalk matrix T, the combined crosstalk matrix defining enhanced virtual gates $P^\dagger,B^\dagger$ for orthogonal control of coupling of the quantum dots in the quantum dot array based on a linear combination of the physical gate voltages P,B.

In an embodiment, controlling a coupling parameter may further include: determining a linear combination of physical gate voltages based on the inverse of the combined crosstalk matrix.

In an embodiment, controlling a coupling of the at least two quantum dots may further include: determining an inverse of the coupling crosstalk matrix $T^{-1}$; and, determining a linear combination of virtual gate voltages P', B' to orthogonally control the coupling of the at least two quantum dots based on the inverse of the coupling crosstalk matrix $T^{-1}$.

In an embodiment, the coupling may be a tunnel coupling that is modelled as a function having one variable wherein the variable is defined as a linear combination of the virtual gates P', B'.

In an embodiment, the function may be an exponential function including a variable $\Phi_{ij}$ which is defined as a linear combination of the virtual gates P', B'.

In an embodiment, the virtual gates B', P' include one or more virtual barrier gates B' for controlling couplings of quantum dots in the quantum dot array while at least partially compensating dot potential crosstalk.

In an embodiment, the virtual gates B', P' may include one or more virtual plunger gates P' for controlling dot potentials of one or more quantum dots in the array of quantum dots, while at least partially compensating dot potential crosstalk.

In an embodiment, the array of quantum dots may be a one-dimensional array of quantum dots, a two-dimensional array of quantum dots or a three dimensional array of quantum dots.

In a second aspect of the invention, a computer for controlling a controller connectable to an array of quantum dots for controlling a coupling of at least two quantum dots in the array of quantum dots is configured to determining dot potential crosstalk ratios of physical gates coupling to dot potentials of quantum dots in the quantum dot array, the dot potential crosstalk ratios defining of a dot potential crosstalk matrix, the inverse of the dot potential crosstalk matrix defining virtual gates as a linear combination of the physical gates for orthogonal control of the dot potentials, wherein determining the dot potential crosstalk ratios include: controlling the controller to apply a voltage to one of the physical gates and to measure cross-talk effects of the applied voltage to the dot potentials of the quantum dots and calculate the ratios between cross-talk effects from different physical gates, determining coupling crosstalk ratios of the virtual gates coupling to dot couplings between one or more pairs of quantum dots in the quantum dot array, the coupling crosstalk ratios defining elements of a coupling crosstalk matrix, the inverse of the coupling crosstalk matrix defining enhanced virtual gates as a linear combination of the virtual gates for orthogonal control of the dot couplings; wherein the coupling crosstalk ratios are determined based on the ratios of partial derivatives of dot couplings between pairs of quantum dots in the quantum dot array with respect to the virtual gate voltages, the determining of a partial derivative including: controlling the controller to apply a voltage perturbation to at least one of the virtual gates, while keeping the voltages on the other virtual gates constant and, in response to the voltage perturbation, to measure a change of the dot coupling of a pair of quantum dots and fitting the change of the dot coupling to a linear function, and controlling the controller based on the enhanced virtual gates, the controlling including using the at least one of the enhanced virtual gates for applying a linear combination of gate voltages to the physical gates to tune the coupling of the at least two quantum dots to a target value.

The invention may also include systems and controller that are configured to execute the above described methods.

The invention may also relate to a software program product comprising software code portions that, when executed on a computer, perform any of the methods described above.

The invention will be further illustrated with reference to the attached drawings, which schematically will show embodiments according to the invention. It will be understood that the invention is not in any way restricted to these specific embodiments.

Brief description of the drawings

> **Fig. 1** depicts an image of a gated quantum dot array;
> **Fig 2** illustrates tunnel coupling crosstalk when controlling a quantum dot array;
> **Fig. 3** depicts a flow diagram of a method of controlling tunnel couplings in a quantum dot array according to an embodiment of the invention.
> **Fig. 4** illustrates orthogonal control of tunnel couplings according to an embodiment of the invention;
> **Fig. 5A-5D** depict experimental data of measuring tunnel coupling contributions according to an embodiment of the invention;
> **Fig. 6A-6F** depict experimental data illustrating orthogonal control of tunnel couplings according to an embodiment of the invention;
> **Fig. 7A** and **7B** depict experimental data illustrating orthogonal control of tunnel couplings for different regimes;
> **Fig. 8** depicts a flow diagram of a method of controlling tunnel couplings in a quantum dot array according to an embodiment of the invention;
> Fig. 9 illustrates setting tunnel couplings to target values based on enhanced virtual gates according to an embodiment of the invention;
> Fig. 10 depicts orthogonal control of tunnel couplings according to another embodiment of the invention;
> Fig. 11 illustrates setting tunnel couplings to target values based on enhanced virtual gates according to another embodiment of the invention;
> Fig. 12A-12F illustrate experimental data illustrating orthogonal control of tunnel couplings according to an embodiment of the invention;
> **Fig. 13** depicts a schematic of a 2D quantum dot array.
> **Fig. 14** depicts orthogonal control of tunnel couplings according to yet another embodiment of the invention;

Detailed description

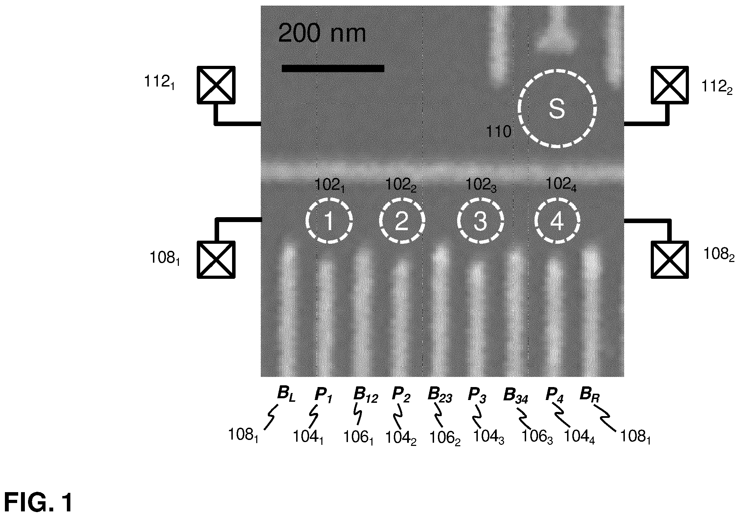

**Fig. 1** depicts a scanning electron microscopy (SEM) image of an example of a quantum dot array. Such arrays may be readily implemented in a 2DEG heterostructure, e.g. a GaAs or InGasAs heterostructures. The dashed circles indicate positions of (in this example) four quantum dots $102_{1-4}$ and an additional quantum dot **110** that can be configured as a charge sensor. The crossed squares indicate reservoirs connected to ohmic contacts. The quantum dots $102_{1-4}$ may be controlled by applying voltages gates, for example to plungers gate electrodes, $P$, and barrier gate electrodes, $B$. Each plunger gate, $P_i$, $104_{1-4}$ is configured to control the chemical potential of dot i. This potential may also be referred to as the dot potential. Similarly, each barrier gate, $B_{ij}$, $106_{1-3}$ is configured to control the inter-dot tunnel couplings, $t_{ij}$ (or in short tunnel couplings) between neighbouring dots $i$ and $j$. The gates may be connected to a bias-tee for fast control of the dot potential and the inter-dot couplings using for example an arbitrary waveform generator. This way a plurality of tunnel junction coupled quantum dots (in this example four dots) may be formed. Outer barriers gates, $B_L$ and $B_R$, may be used to control the tunnel coupling to the left and right charge reservoir $108_{1,2}$ respectively. In addition, charge sensing dot $S$ **110** may be operated as a charge sensor which is capacitively coupled to one of the quantum dots of the quantum dot array. A charge transition in the quantum dot array may be detected by the charge sensor as e.g. a change in the conductance of the charge sensor. The change in conductance may be measured using radio-frequency (RF) reflectometry to achieve fast read-out of the charge configuration.

A change in a voltage applied to one or more gates, e.g. the plunger gates $P$ and/or barrier gates $B$, may introduce crosstalk effects on dot potentials in the quantum dot array due to cross-capacitance coupling (or in short crosstalk coupling). In multi-dot applications, typically the dot-potential crosstalk of the gates $P$ and $B$ is characterized (measured) and defined on the basis of a dot potential crosstalk matrix C. The measured dot-potential crosstalk may be used to define virtual gates, e.g. plunger gates $P'$ and virtual barrier gates $B'$, wherein each virtual gate is configured to control a dot potential of a quantum dot in the array without affecting the dot potentials of the other quantum dots in the array. Thus, the dot potential crosstalk matrix $C$ may be used to define a first set of virtual gates $\{P',B'\}$ for orthogonal control of the dot potentials as a linear combination of the physical gate voltages $\{P,B\}$. When applying this to the array of **Fig. 1**, the following relation between the gates and the virtual gates can be obtained:

$$
\begin{pmatrix} P'_1 \\ P'_2 \\ P'_3 \\ P'_4 \\ B'_{12} \\ B'_{23} \\ B'_{34} \end{pmatrix} = \begin{pmatrix} 1 & \alpha_{12} & \alpha_{13} & \alpha_{14} & \alpha_{15} & \alpha_{16} & \alpha_{17} \\ \alpha_{21} & 1 & \alpha_{23} & \alpha_{24} & \alpha_{25} & \alpha_{26} & \alpha_{27} \\ \alpha_{31} & \alpha_{32} & 1 & \alpha_{34} & \alpha_{35} & \alpha_{36} & \alpha_{37} \\ \alpha_{41} & \alpha_{42} & \alpha_{43} & 1 & \alpha_{45} & \alpha_{46} & \alpha_{47} \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \end{pmatrix} \begin{pmatrix} P_1 \\ P_2 \\ P_3 \\ P_4 \\ B_{12} \\ B_{23} \\ B_{34} \end{pmatrix}
$$

$$(1)$$

The linear combination of the physical gates, e.g. the plunger gate voltages $P$ and the physical barrier gate voltages $B$, to orthogonally control the dot potentials may be obtained from the inverse dot potential crosstalk matrix $C^{-1}$. Here, orthogonal control refers to a type of control based on the virtual gate voltages $\{P',B'\}$ wherein a change in the virtual gate voltage $P'_i$ only induces a change in the dot potential of quantum dot $i$, while the dot potentials of the other quantum dots in the array are not affected (or minimally affected).

The off-diagonal elements $\alpha_{ij}$ of the dot potential crosstalk matrix $C$ may define (normalized) dot potential crosstalk ratios from gate voltage $j$ to the dot potential of dot i. For example, when applied to the array of **Fig. 1**, dot potential crosstalk ratio $\alpha_{12} = \frac{\partial \mu_1}{\partial P_2} / \frac{\partial \mu_1}{\partial P_1}$ may define the crosstalk from plunger gate voltage $P_2$ of the second dot to the dot potential of the first quantum dot. Similarly, dot potential crosstalk ratio $\alpha_{13}$ may define the crosstalk from plunger gate voltage $P_3$ to the dot potential of the first quantum dot: $\alpha_{13} = \frac{\partial \mu_1}{\partial P_3} / \frac{\partial \mu_1}{\partial P_1}$ ; dot potential crosstalk ratio $\alpha_{14}$ may define the crosstalk from plunger gate voltage $P_4$ to the potential of the first quantum dot; dot potential crosstalk ratio $\alpha_{15}$ may define the crosstalk from barrier gate voltage $B_{12}$ to the dot potential of the first quantum dot: $\alpha_{15} = \frac{\partial \mu_1}{\partial B_{12}} / \frac{\partial \mu_1}{\partial P_1}$ etc. (all $\alpha_{ij}$ are positive).

As shown from equation (1), elements of the dot potential crosstalk matrix $C$ that relate to crosstalk effects of a gate voltage to the tunnel coupling of a tunnel barrier are not taken into account. These values are set to zero. Typical quantum dot control systems use this approximation because the crosstalk influence of a gate voltage on tunnel couplings requires a non-linear (exponential) description of the system, which makes orthogonal control a non-trivial problem. Thus, the first set of virtual gate voltages $\{P', B'\}$ for orthogonal dot potential control as described with reference to equation (1) above, does not incorporate tunnel coupling crosstalk effects. Therefore, applying a virtual barrier voltage $B'_{ij}$ not only changes the tunnel coupling $t_{ij}$ between dot $i$ and dot $j$, but also affects nearby tunnel couplings.

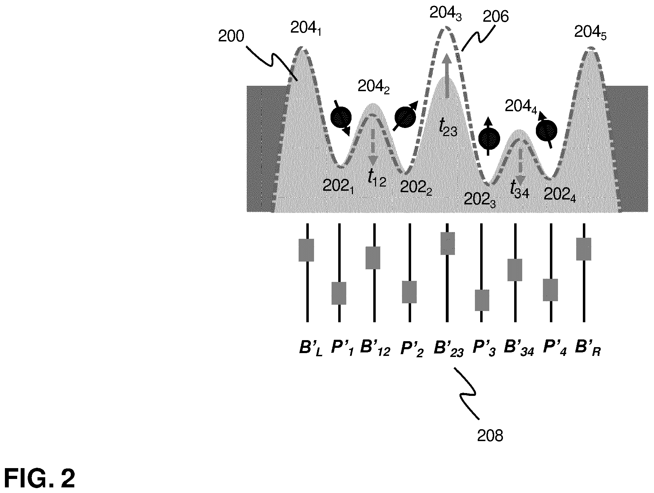

**Fig 2** illustrates the influence of a change in the virtual barrier voltage on the shape of the energy landscape of a quantum dot array, for example a linear quantum dot array as depicted in **Fig. 1**. As shown in **Fig. 2**, the potential landscape **200** includes energy minima **202**$_{1-4}$ wherein each energy minimum may schematically represent the potential well of a quantum dot, which can be controlled by applying a voltage to a gate, e.g. a plunger gate $P$. The quantum dots are separated by potential maxima **204**$_{1-5}$ representing a potential barrier. Such a potential barrier may determine a tunnel coupling between two neighbouring dots and can be controlled by applying a voltage to a barrier gate $B$. Increasing the tunnel coupling provides an increased coupling between electron states in both quantum dots, allowing electrons to tunnel more easily from one quantum dot to the other quantum dot. Such fine control of the tunnel couplings is for example needed when the quantum dots in the array are used as qubits of a quantum computer. The size of the potential barrier may provide an indication of the strength of the tunnel coupling $t_{ij}$ between neighbouring quantum dots. Here, a "larger" tunnel barrier may indicate a "weak" tunnel coupling and a "small" tunnel barrier a "high" tunnel coupling.

As shown in **Fig. 2**, changing virtual barrier voltage $B'_{23}$ (which controls the tunnel coupling $t_{23}$ between the quantum dot 2 and 3 will influence the shape of the potential landscape of the quantum dot array. The grey area **200** schematically illustrates the original shape of the energy landscape before changing the barrier voltage and the dashed line **206** illustrate the shape of the energy landscape after decreasing the virtual barrier voltage $B'_{23}$ (which increases the coupling strength $t_{23}$ between the dots). The virtual gate voltages are controlled based on a cross-capacitance matrix as described above with reference to equation (1). Adjusting virtual barrier gate voltage $B'_{23}$ to increase tunnel coupling $t_{23}$ keeps the dot potentials of the quantum dots unchanged, but will influence tunnel couplings of nearby quantum dots (in the example it lowers the tunnel couplings $t_{12}$ and $t_{34}$). This effect is caused by the fact that the virtual gate voltages $\{P',B\}$ for orthogonal dot potential control do not take the cross-talk contribution of the gates on the tunnel couplings into account. In order to address the problem of the effect of crosstalk on the tunnel couplings in a quantum dot array, the inventors developed schemes for efficient orthogonal control of tunnel couplings in a quantum dot array.

To that end, the effect of the gate voltages onto the tunnel couplings needs to be taken into account. For a large inter-dot barrier, a tunnel coupling $t_{ij}$ between dot $i$ and $j$ may be approximated by the following exponential function:

$$t_{ij} = t_0 \exp(\Phi_{ij}) = t_0 \exp\left(\sum_k \Lambda_k^{ij} P'_k + \sum_{kl} \Gamma_{kl}^{ij} B'_{kl}\right) \quad (2)$$

wherein $\Phi_{ij}$ is a spatial integral of $-\sqrt{2m_e(V_{ij}(x) - E)}$ ($m_e$ is the electron mass, $V_{ij}(x)$ is the potential of the barrier at a position x, and E is the energy of the tunnel electron). As shown by equation (2), $\Phi_{ij}$ is expressed as a linear combination of the virtual gate $P'$ and $B'$ with pre-factors $\Lambda$ and $\Gamma$ respectively. Here, $\Lambda_k^{ij}$ represent a factor for $P'_k$, and $\Gamma_{kl}^{ij}$ denotes a factor for $B'_{kl}$. Based on equation (2) and the first set of virtual gates $\{P',B\}$ that enable orthogonal control of the dot potentials, a second set of virtual gates $\{P^\dagger,B^\dagger\}$ may be defined that allow orthogonal control of the tunnel couplings. These virtual gates, which allow enhanced control of the quantum dot, may be referred to as enhanced virtual gates.

A tunnel coupling crosstalk matrix $T$ may be defined which defines the set of enhanced virtual gates $\{P^\dagger,B^\dagger\}$ for orthogonal control of the tunnel couplings as a linear combination of virtual gate voltages of the first set of virtual gates $\{P',B\}$, that are configured for orthogonal control of the dot potentials:

$$\begin{pmatrix} P_1^\dagger \\ P_2^\dagger \\ P_3^\dagger \\ P_4^\dagger \\ B_{12}^\dagger \\ B_{23}^\dagger \\ B_{34}^\dagger \end{pmatrix} = \begin{pmatrix} 1 & 0 & 0 & 0 & 0 & 0 & 0 \\ 0 & 1 & 0 & 0 & 0 & 0 & 0 \\ 0 & 0 & 1 & 0 & 0 & 0 & 0 \\ 0 & 0 & 0 & 1 & 0 & 0 & 0 \\ \beta_{51} & \beta_{52} & \beta_{53} & \beta_{54} & 1 & \beta_{56} & \beta_{57} \\ \beta_{61} & \beta_{62} & \beta_{63} & \beta_{64} & \beta_{65} & 1 & \beta_{67} \\ \beta_{71} & \beta_{72} & \beta_{73} & \beta_{74} & \beta_{75} & \beta_{76} & 1 \end{pmatrix} \begin{pmatrix} P_1' \\ P_2' \\ P_3' \\ P_4' \\ B_{12}' \\ B_{23}' \\ B_{34}' \end{pmatrix}$$

$$(3)$$

Here, a tunnel coupling crosstalk ratio $\beta_{ij}$ may define the ratio between pre-factors. This way, each tunnel coupling crosstalk ratio may be defined in terms of the factors $\Lambda$ and $\Gamma$: $\beta_{51} = \Lambda_1^{12}/\Gamma_{12}^{12}$, $\beta_{52} = \Lambda_2^{12}/\Gamma_{12}^{12}$, $\beta_{56} = \Gamma_{23}^{12}/\Gamma_{12}^{12}$, etc. The linear combination of $P'$ and $B'$ to orthogonally control the tunnel couplings is obtained from the inverse of the tunnel coupling crosstalk matrix $T^{-1}$. This way, the virtual barrier gate $B_{ij}^\dagger$ orthogonally links to $\Phi_{ij}$ with a factor $\Gamma_{ij}^{ij}$, so that it can be used for orthogonal control of tunnel couplings. Although $t_{ij}$ scales exponentially with $P'$ and $B'$, as long as the factors $\Lambda$ and $\Gamma$ remain the same, orthogonal control with $B^\dagger$ remains valid for any value of tunnel couplings.

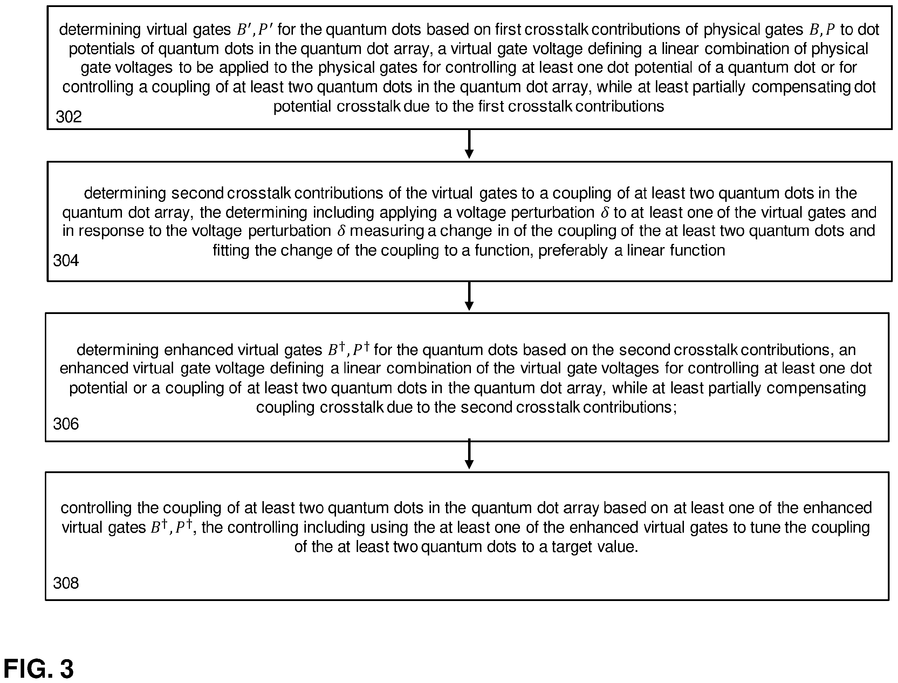

**Fig. 3** depicts a flow diagram of a method of controlling couplings between quantum dots in a quantum dot array according to an embodiment of the invention. As shown in this figure, the method may include a step of determining virtual gates $B', P'$ for the quantum dot array based on first cross-capacitance contributions of physical gates $B, P$ of the quantum dot array to the dot potentials of quantum dots in the quantum dot array (step **302**).

Here, a virtual gate voltage defines a linear combination of physical gate voltages to be applied to the physical gates of the quantum dot array for controlling a dot potential of a quantum dot or a tunnel coupling between at least one pair of quantum dots, and for compensating or at least partially compensating dot potential crosstalk due to the first crosstalk contributions. The crosstalk contributions of physical gates $B$, $P$ may be determined by applying a small to change to a gate voltage applied to one quantum dot in the array and measuring a change in the dot potential of one or more other quantum dots in the array. The crosstalk contributions may be used to determine dot potential crosstalk ratios of a dot potential crosstalk matrix as described above with reference to equation (1). Here, the dot potential crosstalk matrix provides the relation between the virtual gates $B'$, $P'$ and the physical gates $B$, $P$.

Thereafter, second crosstalk contributions of the virtual gates to the tunnel couplings between pairs of quantum dots in the quantum dot array may be determined (step **304**). These contributions may be determined by applying a voltage perturbation $\delta B'$ to at least one of the virtual gates $B'$ to control a coupling between quantum dots or voltage perturbation $\delta P'$ to at least one of the gates $P'$ to control a dot potential. In response to the voltage perturbation a change in a coupling $\delta t$ between quantum dots in the quantum dot array may be measured and each of these changes $\delta t$ in the coupling may be fitted to a linear function. This way, coupling crosstalk contributions may be determined, which may be used to determine coupling crosstalk ratios of the coupling crosstalk matrix $T$.

The thus determined second crosstalk contributions, including partial derivatives $\dfrac{\partial t_{ij}}{\partial B_{kl}}$, may be used to relate enhanced virtual gates $B^\dagger$, $P^\dagger$ for the quantum dot array to virtual gates $B'$, $P'$. Here, an enhanced virtual gate voltage defines a linear combination of the virtual gate voltages for controlling at least one dot potential or a coupling between quantum dots, and for at least partially compensating coupling crosstalk due to the second crosstalk contributions (step **306**).

Thus, the crosstalk contributions may be used to determine coupling crosstalk ratios for the coupling crosstalk matrix T for providing the relation between enhanced virtual gates $B^\dagger$, $P^\dagger$ and virtual gates $B'$, $P'$. Finally, the method may include a step of controlling a coupling between quantum dots in the array on the basis of one of the enhanced virtual gates $B^\dagger$, $P^\dagger$, wherein the controlling may include using an enhanced virtual gate for tuning a coupling between quantum dots in the quantum dot array to a target value (step **308**).

Hence, the method as depicted in **Fig. 3** enables orthogonal control of coupling between quantum dots in a quantum dot array, typically a gated quantum dot array. The inventors have found that despite the exponential dependence of coupling on gate voltages, ratios between crosstalk factors in the exponent of a coupling between at least two quantum dots, e.g. a tunnelling coupling (which may be referred to as coupling crosstalk ratios) may be efficiently be obtained from the derivatives of couplings with respect to virtual gate voltages, i.e. a change in a coupling, e.g. a tunnelling coupling between two quantum dots in the array in response to an perturbation in the virtual gate voltage of a further quantum dot in the array. This way, calibration of dot couplings and configuration of quantum dots for certain applications, e.g. quantum simulations using gate-controlled quantum dot arrays, can be efficiently achieved. The calibration method described with reference to **Fig. 3** may be referred in this application as the differential calibration method or in short the differential method.

Different coupling between quantum dots may be controlled. The couplings may include: tunnel coupling, a co-tunnelling coupling, an exchange coupling and/or a capacitive coupling.

For example, in an embodiment, the enhanced virtual gate $B^\dagger_{ij}$ may facilitate orthogonal control of the exchange coupling $J_{ij}$, between two spins in dots $i$ and $j$. It is noted that the that $J_{ij} = \left( \sqrt{\epsilon_{ij}^2 + 8t_{ij}^2} + \epsilon_{ij} \right)/2$, where $\varepsilon_{ij}$ is the energy detuning between (2,0) and (1,1) singlets, near the (2,0)-(1,1) transition, and the exchange coupling $J_{ij} = 4t_{ij}^2/E_c$, where $E_c$ is the charging energy, when the single dot levels in the two dots are aligned. Since $B^\dagger_{ij}$ orthogonally controls $t_{ij}$ while keeping the dot potentials fixed ($\Delta \varepsilon_{ij} = 0$), $B^\dagger_{ij}$ also orthogonally controls $J_{ij}$.

In another embodiment, a set of enhanced virtual gates $B^\dagger$, $P^\dagger$, based on the crosstalk of $B'$,$P'$ to the distances between charges, may facilitate orthogonal control of the capacitance couplings because a capacitance coupling is a function of the distance and the distances are orthogonally controlled with $B^\dagger$, $P^\dagger$.

In an embodiment, a set of enhanced virtual gates $B^\dagger$, $P^\dagger$, based on the crosstalk of $B'$, $P'$ to the products of tunnel couplings involved in a co-tunneling path, may facilitate orthogonal control of the capacitance couplings because a co-tunnel coupling is a function of the product of the tunnel couplings involved and the products are orthogonally controlled with $B^\dagger$, $P^\dagger$.

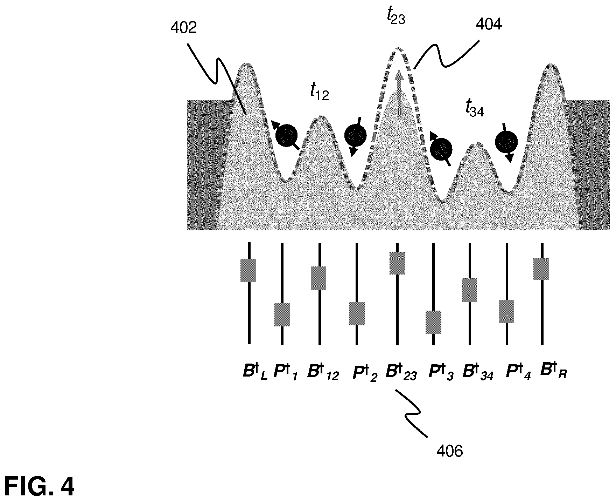

**Fig. 4** illustrates the orthogonal control of tunnel couplings as e.g. described with reference to **Fig. 3**. As shown in this figure, changing enhanced virtual barrier voltage $B_{23}^{\dagger}$ (which controls the tunnel coupling $t_{23}$ between the 2th and 3rd quantum dot) will influence the shape of the potential landscape of the quantum dot array. The grey area **402** denotes the original landscape, and the dashed line **404** indicates the landscape when the voltage of the enhanced virtual barrier $B_{23}^{\dagger}$ is decreased. Due to the fact that the tunnel coupling crosstalk is taken into account for the enhanced virtual gate barriers, tunnel coupling $t_{23}$ can orthogonally controlled using the enhanced virtual gate $B_{23}^{\dagger}$ **406** without affecting other tunnel couplings and dot potentials.

A double quantum dot system in the quantum dot array of **Fig. 1,** e.g. quantum dot 2 and 3, may be used to demonstrate determining the tunnel coupling cross-capacitance ratios between Γ from the derivatives of tunnel couplings with respect to $B$'.

First, capacitive couplings from $P$ and $B$ to each dot potential may be determined. This is done by measuring the shift $\delta P_i$ ( $= \delta P_i'$ since $\frac{\delta P_i'}{\delta P_i} = 1$ ) in the voltage on $P_i$ for charge addition to dot i with a voltage change $\delta P_j$ ($\delta B_{ij}$). Here the voltage change may be in the order of mVs, e.g. 5 mV or less. The measured capacitive couplings ( $\frac{\delta P_i'}{\delta P_j}$ and $\frac{\delta P_i'}{\delta B_{ij}}$ ) are then used to form dot potential crosstalk matrix C as described with reference to equation (1). Based on the matrix, the potential of dot i may be orthogonally tuned using potential $P_i'$ and keep the potential unchanged when $B_{ij}'$ is adjusted. At this point, the crosstalk compensation only makes the control of dot potentials orthogonal to each other, not the tunnel couplings. Tuning $t_{ij}$ by varying $B_{ij}'$ typically affects the tunnel coupling $t_{kl}$ of neighbouring dot pairs since the crosstalk from $B_{ij}'$ to $t_{kl}$ has not been characterized yet.

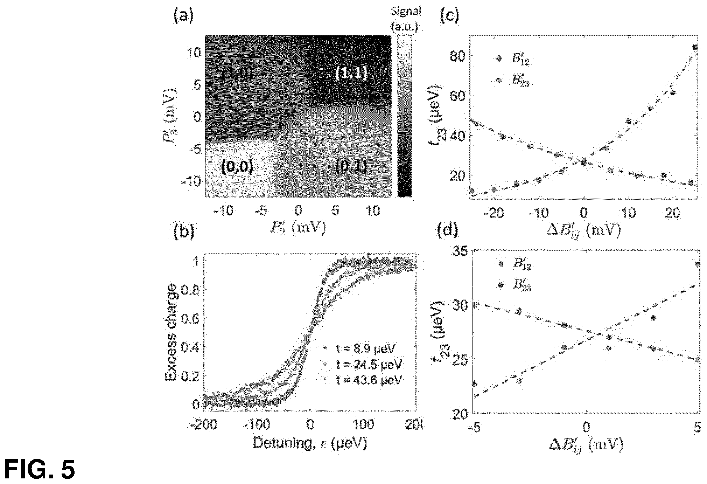

**Fig. 5A** depicts a charge stability diagram showing sensing-dot signal as a function of voltages on $P_2'$ and $P_3'$. Here, the notation ($N_2$, $N_3$) indicates charge occupation of dot 2 and 3. The dashed line indicates the axis for detuning. The inter-dot tunnel coupling $t_{23}$ may be characterized near the (0,1)-(1,0) inter-dot transition by scanning dot potentials along the detuning axis as visualized by a dotted line in **Fig. 5A. Fig. 5B** depicts the charge extracted from a fit to the sensing-dot signal as a function of the detuning near the inter-dot transition in **Fig. 5A.**

The gate voltages are converted to dot detuning using lever arms measured with photon-assisted tunnelling. The smooth variation in charge occupation is caused by thermal excitation and charge hybridization via the inter-dot tunnel coupling, and may be fitted to the model of the tunnelling coupling to obtain the value of the tunnel couplings. Utilising this method, an inter-dot tunnel coupling can be measured. The crosstalk of virtual barrier $B_{kl}'$ on tunnel coupling $t_{ij}$ can be characterized by varying the voltage on $B_{kl}'$ and then measuring the change in $t_{ij}$. It is important to use the virtual barrier gate $B_{kl}'$ instead of the physical barrier gate $B_{kl}$ because varying $B_{kl}'$ keeps the dot potentials unchanged so that they remain close to the inter-dot transition. Hence, inter-dot transition scans can be performed subsequently at different $B_{kl}'$ without manually adjusting dot potentials.

**Fig. 5C** depicts the tunnel coupling $t_{23}$ as a function of virtual barrier voltage $B_{12}'$ and neighbouring virtual barrier gate $B_{23}'$, with an exponential fit to the data. Data (colored circles) for different $t_{23}$ is shown together with the fitted curves (dashed lines). The tunnel coupling $t_{23}$ may be obtained from a fit to a model of the tunnelling coupling as described in Van Diepen, C. J. et al. Automated tuning of inter-dot tunnel coupling in double quantum dots, Applied Physics Letters 113, 033101 (2018).

As shown in this figure, when virtual gate $B_{23}'$ becomes more positive, the potential barrier between dots 2 and 3 is lowered so that tunnelling coupling $t_{23}$ increases exponentially. Increasing virtual gate $B_{12}'$, however, causes a crosstalk effect which results in an exponentially decreasing tunnel coupling $t_{23}$. The crosstalk from virtual gate $B_{12}'$ to

tunnel coupling $t_{23}$ can be understood from the following factors. First, increasing $B'_{12}$ also increases $B_{12}$, which capacitively lowers the barrier for $t_{23}$. Second, in order to keep dot potentials fixed, the voltage on physical gate $P_2$ is decreased to compensate the crosstalk from the increased voltage on physical gate $B_{12}$ to the potential of dot 2. Decreasing physical gate $P_2$ makes the tunnel barrier associated with tunnel coupling $t_{23}$ higher more than the lowering by $B_{12}$, resulting in a lowered tunnelling coupling $t_{23}$. Thirdly, increasing the virtual gate $B'_{12}$ may shift the wavefunction of the electron in dot 2 away from the electron in dot 3, hence reduce the tunnel coupling. Combining these factors leads to the negative crosstalk of $B'_{12}$ on $t_{23}$. Fitting the data in **Fig. 5C** to an exponential function $t_{23} = t_0 \exp(\Gamma^{23}_{kl} B'_{kl})$, results in tunnel coupling crosstalk contributions $\Gamma^{23}_{12} = -2.31 \pm 0.08 * 10^{-2} \text{ mV}^{-1}$, $\Gamma^{23}_{23} = 4.26 \pm 0.17 * 10^{-2} \text{ mV}^{-1}$ and an associated tunnel crosstalk ratio $r = |\Gamma^{23}_{12}/\Gamma^{23}_{23}| = 54 \pm 3\%$.

The ratio between $\Gamma^{23}_{12}$ and $\Gamma^{23}_{23}$ may be obtained more efficiently using the differential method of **Fig. 3,** which includes varying virtual gates $B'_{12}$ and $B'_{23}$ over a small excitation range and measuring $\frac{\partial t_{23'}}{\partial B'_{12}}$ and $\frac{\partial t_{23'}}{\partial B'_{23}}$ using a linear fit, which results in $\frac{\partial t_{23'}}{\partial B'_{12}} = -0.53 \pm 0.02 \text{ µeV/mV}$, $\frac{\partial t_{23'}}{\partial B'_{23}} = 1.03 \pm 0.18 \text{ µeV/mV}$ and a tunnel coupling crosstalk ratio r' = $|\frac{\partial t_{23'}}{\partial B'_{12}}/\frac{\partial t_{23'}}{\partial B'_{23}}| = 51 \pm 9\%$. From equation (2), it can be determined that $\Gamma^{23}_{12}/\Gamma^{23}_{23} = \frac{\partial t_{23'}}{\partial B'_{12}}/\frac{\partial t_{23'}}{\partial B'_{23}}$, which is confirmed by the similar ratios $r$ and $r'$ from the two different measurements in **Fig. 5C** and **5D.** This result indicates that it is indeed sufficient to measure the derivative of a tunnel coupling with respect to $B'$ to efficiently characterize the ratios between $\Gamma$, which are used for defining the enhanced virtual gates $B^\dagger$.

Here, the factors $\Lambda$ for $P'$ in equation (2) are not characterize. To stay near the inter-dot transition, two neighbouring virtual gates $P'_i$ and $P'_j$ need to be varied together, therefore $\Lambda^{ij}_i$ and $\Lambda^{ij}_j$ cannot be independently measured. However, this does not affect the orthogonal control of tunnel coupling $t_{ij}$ using virtual gate $B^\dagger_{ij}$. In fact, the linear combination of gate voltages needed to orthogonally change $B^\dagger$ is independent of $\Lambda$.

The crosstalk calibration and the orthogonal control of inter-dot tunnel couplings of the quantum dot array of **Fig. 1** may be determined using the above-described tunnel coupling calibration method. The capacitive coupling to dot potentials may be characterized for an arbitrary condition, where $t_{12}$ = 35 µeV, $t_{23}$ = 23 µeV and $t_{34}$ = 26 µeV and gates $P' B'$ may be defined in terms of physical gates $B, P$ using the dot potential crosstalk matrix C as defined by equation (1), The quantum dot array may then tuned to the (1,0,1,1)-(0,1,1,1) inter-dot transition to measure $t_{12}$, where $(N_1, N_2, N_3, N_4)$ indicates the charge occupation from dot 1 to dot 4.

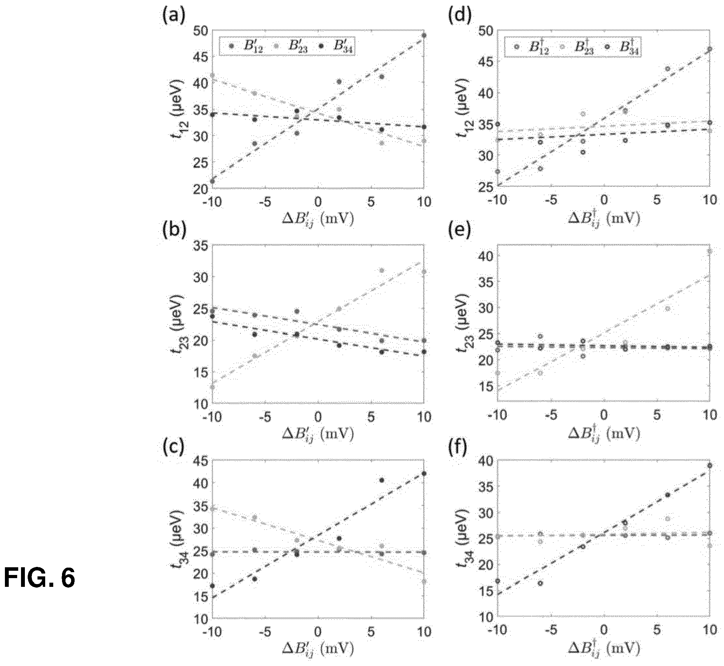

The dependence of tunnel coupling $t_{12}$ on the virtual gates $B'$ is shown in **Fig. 6A.** As expected, $t_{12}$ shows the largest dependence on the corresponding barrier $B'_{12}$. Further, based on the differential method described above one may determine that $\frac{\partial t_{12}}{\partial B'_{12}} = 1.32$ µeV/mV, $t_{12}$ = 35 µeV, and $\Gamma^{12}_{12} = 3.77 * 10^{-2} \text{ mV}^{-1}$. Changing virtual gate $B'_{23}$ has a negative crosstalk effect on $t_{12}$ of about 50% compared with the effect from $B'_{12}$. The crosstalk effect due to virtual gate $B'_{34}$ is weaker (-10%), which is expected, because this gate is positioned $B'_{34}$ further away from $B'_{12}$ than $B'_{23}$. The crosstalk on $t_{23}$ and $t_{34}$ is also characterized by tuning the quadruple dot to (1,1,0,1)-(1,0,1,1) and (1,1,1,0)-(1,1,0,1) transitions, respectively.

**Fig. 6B,** $t_{23}$ shows the largest dependence on virtual gate $B'_{23}$ wherein $\Gamma^{23}_{23} = 4.18 * 10^{-2}$ mV$^{-1}$. The crosstalk of $B'_{12}$ and $B'_{34}$ on $t_{23}$ is about 30%. In **Fig. 6C,** $t_{34}$ shows the largest dependence on virtual gate $B'_{34}$ wherein $\Gamma^{34}_{34} = 5.39 * 10^{-2} \text{ mV}^{-1}$. The crosstalk of $B'_{23}$ on $t_{34}$ is about 50% and the crosstalk of $B'_{12}$ is <1.

To achieve orthogonal control of tunnel couplings, the characterized crosstalk may be arranged into the tunnel coupling crosstalk matrix $T$ as described with reference to equation (3), which give the relation between $B^\dagger$ and $B'$. Note

that an additional crosstalk characterization may be carried out to further eliminate the residual crosstalk. The dot potential crosstalk matrix $C$ and the tunnel coupling crosstalk matrix $T$ may be combined into an overall crosstalk matrix which relates the enhanced virtual gates $B^\dagger$, $P^\dagger$ directly to the physical gate voltages $P,B$. The inverse of this matrix allows each enhanced virtual gate to be written in a linear combination of physical gates.

**Fig. 6D-6F** show the measured tunnel couplings as a function of the enhanced virtual gates $B^\dagger$. Each tunnelling coupling $t_{ij}$ is only affected by the respective enhanced virtual gate $B^\dagger_{ij}$ and crosstalk of other enhanced virtual gates $B^\dagger$ is significantly suppressed (< 8. This results shows that the enhanced virtual gates $B^\dagger$ orthogonally control the tunnel couplings in the quantum dot array. Based on the enhanced virtual gates $B^\dagger$, the quantum dot array can be quickly tuned to a desired configuration, for example, $t_{12} = t_{23} = t_{34}$.

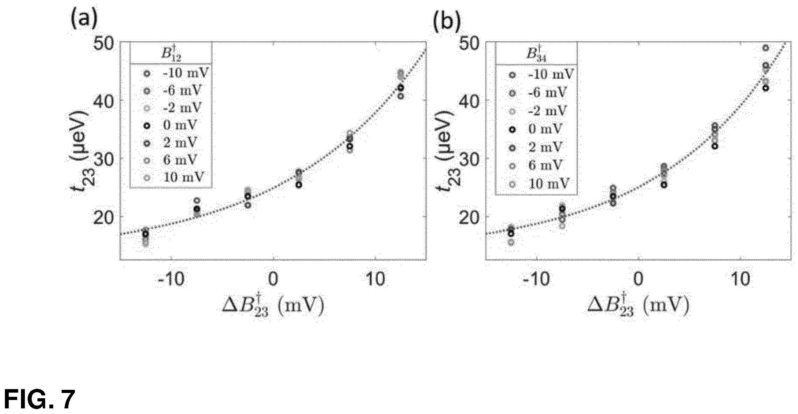

In order to show that the enhanced virtual gates $B^\dagger$ compensate for crosstalk despite the exponential dependence of the tunnelling coupling as described by equation (2), $B^\dagger$ may first be calibrated when the tunnel coupling is set to $t_{23}$ = 25 $\mu$eV, and then the crosstalk effect on the tunnelling coupling $t_{23}$ on $B^\dagger_{23}$ is measured for different values of enhanced virtual gates $B^\dagger_{12}$ and $B^\dagger_{23}$. **Fig. 7A** and **7B** show tunnel coupling element $t_{23}$ as a function of $\Delta B^\dagger_{23}$ for different $\Delta B^\dagger_{12}$ and $\Delta B^\dagger_{34}$ respectively, plotted with the exponential fit to the data. $\Delta B^\dagger_{ij}$ is the voltage relative to $B^\dagger_{ij}$ when $t_{ij} \sim 25$ $\mu$eV. These figures show that changing the enhanced virtual gate $B^\dagger_{23}$ by 25 mV exponentially increases the tunnel coupling $t_{23}$ by 27 $\mu$eV. Further, these figures show that varying the enhanced virtual gates $B^\dagger_{12}$ and $B^\dagger_{34}$ by 20 mV only has a minor effect on the tunnel coupling $t_{23}$ (crosstalk < 10% except for $B^\dagger_{23} = -7.5$ and -12.5 mV, where the small $\frac{\partial t_{23}}{\partial B^\dagger_{23}}$ results in a higher cross-talk ratio due to uncertainty of the linear fit).

These results show that the orthogonal control of tunnel couplings based on the enhanced virtual gate $B^\dagger$ works for a large range of different settings even though the calibration was done for a particular setting $t_{23} = 25$ $\mu$eV. This can be explained by the fact that the enhanced virtual gate $B^\dagger$ actually compensates for the crosstalk factors in the exponent $\Phi$ (see equation (2)) rather than just compensate for linearized the dependence of tunnel couplings in a small range of gate voltages. As long as the crosstalk factors $\Gamma$ for the virtual gates $B'$ do not change, orthogonal control of tunnel couplings using $B^\dagger$ is effective for a large range of tunnel coupling values.

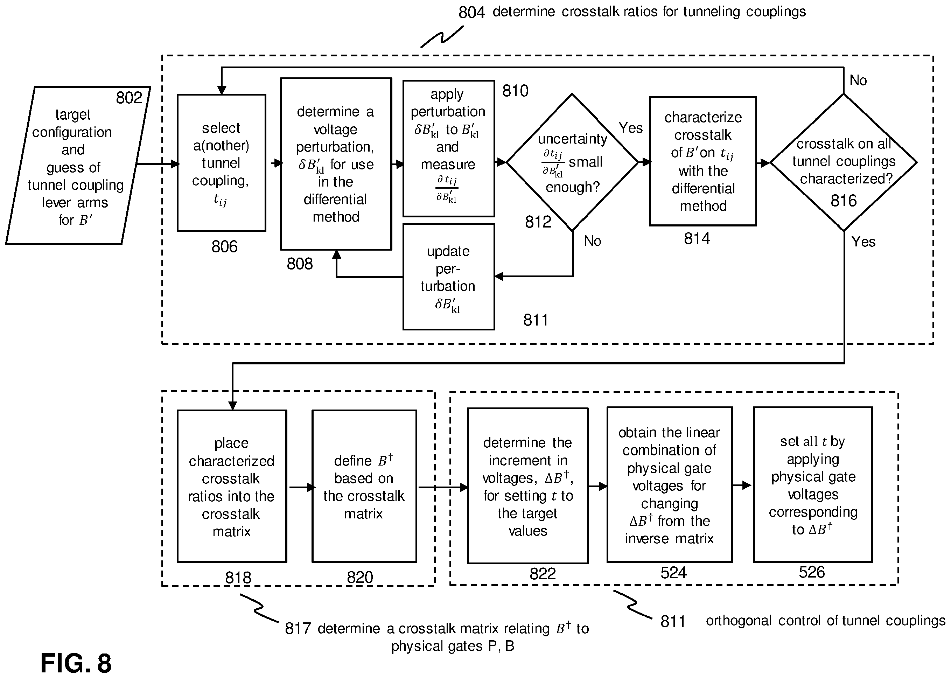

**Fig. 8** depicts a flow diagram of a method of controlling tunnel couplings in a quantum dot array according to an embodiment of the invention. The method may start with a step of determining a target configuration of tunnel couplings, e.g. a target configuration defining target values of tunnel couplings between one or more pairs of quantum dots in a quantum dot array. Here, the target configuration may be associated with a certain step in a quantum computing simulation process. Further, virtual barrier voltages $B'$ (step **802**) may be determined for an initial estimate of the target values. Thereafter, the cross-capacitance contributions for the tunnel couplings may be determined (step **804**). These cross-capacitance contributions may include values describing the crosstalk of a virtual gate voltage on tunnel couplings of pairs of quantum dots in the quantum dot array.

As shown in **Fig. 8,** the determining of the cross-capacitance contributions may include: selecting a tunnel barrier associated with a tunnel coupling $t_{ij}$ between a quantum dot $i$ and a quantum dot $j$ (step **806**). Further, the determining may include a step **808** of determining a voltage perturbation, $\delta B'_{kl}$ that may be used for determining crosstalk ratios for tunnel coupling $t_{ij}$ and virtual gate $B'_{kl}$ (step **808**) based on the first cross-capacitance contributions of physical gates $B, P$ as described with reference to **Fig. 3**. This voltage perturbation may be used to drive gate voltage $B'_{kl}$ over a small voltage range $\delta B'_{kl}$ and to measure the derivative $\frac{\partial t_{ij}}{\delta B'_{kl}}$ (step **810**). If the response signal is strong enough, i.e. the error in the derivative $\frac{\partial t_{ij}}{\delta B'_{kl}}$ is small enough, (step **812**), then the perturbation $\delta B'_{kl}$ may be used for determining the cross-capacitance contributions for the tunnel couplings (step **814**). If not, the perturbation $\delta B'_{kl}$ may be updated (step **811**) and the updated perturbation may be used to determine a new crosstalk ratio according to steps **810** and **812**. This process may be repeated until the crosstalk ratios for all tunnel couplings are determined (step **816**).

If the crosstalk due to the gate voltages on all tunnel couplings is characterized, the tunnel coupling crosstalk matrix T may be constructed (step **817**). This, step may include determine the crosstalk ratios and place the crosstalk ratio's in the matrix (step **818**). Then, based on this matrix enhanced virtual gates $\{P^\dagger, B^\dagger\}$ may be defined as a linear combination of the virtual gates B', P' (steps **820**).

Thereafter, the tunnelling couplings of the quantum dot array can be orthogonally controlled (step **821**). For example, for each enhanced virtual gate a voltage increments $\Delta B^\dagger$ for the enhanced virtual gates may be determined to set the tunnel couplings to the target values (step **822**). Further, based on the inverse of the tunnel coupling crosstalk matrix and the dot potential matrix, a linear combination of physical gate voltages may be obtained (step **824**) and are used to achieve the voltage increments $\Delta B^\dagger$ for the enhanced virtual gates (step **826**). Thus, in the scheme of **Fig. 8,** first all crosstalk contributions are determined and then based on the crosstalk contributions the enhanced virtual gate may be defined to orthogonally control the tunnelling couplings in the quantum dot array.

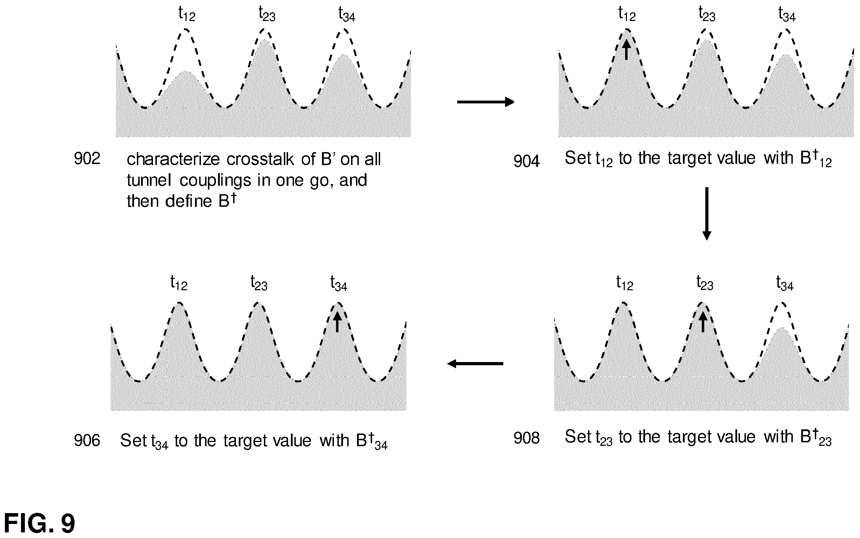

**Fig. 9** illustrates part of the calibration scheme for controlling tunnel couplings in a quantum dot array. As shown in this figure, crosstalk contributions of virtual gates B' on all tunnelling couplings are determined in one go and based on this crosstalk contributions the enhanced virtual gates $B^\dagger$ may be defined (step **902**). Based on these enhanced gates, each tunnel coupling element $t_{ij}$ can be set to a target value (step **904-908**). This way all tunnelling couplings can be set to a target value.

In the tunnelling coupling control methods described with reference to **Fig. 8** and **9** first the crosstalk on every tunnel coupling is characterized, and then the enhanced virtual gates $B^\dagger$ are defined that allow orthogonal tuning of all of the tunnel couplings to target values. However, if some of the tunnel couplings in the initial configuration are small, the crosstalk ratio obtained using the method will have a larger error because $\dfrac{\partial t_{ij}}{\partial B'_{kl}} \propto t_{ij}$ and the error in measuring $t_{ij}$ is roughly 1 $\mu$eV. In addition, the issue of crosstalk comes back if one wants to use virtual gate B' to tune all tunnel couplings to be large enough (> 20 $\mu$eV in the present examples).

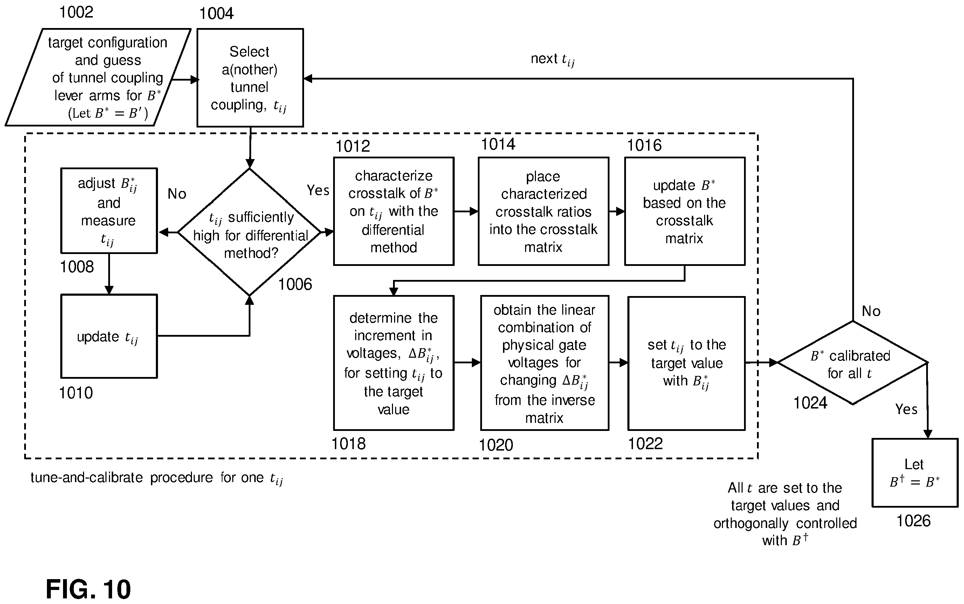

**Fig. 10** depicts orthogonal control of tunnel couplings according to another embodiment of the invention. In particular, the figure depicts a flow diagram of a crosstalk calibration method for the tunnel couplings in a quantum dot array which addresses the above-mentioned problem of initial configurations that include small tunnel couplings. The method defines a so-called stepwise tune-and-calibrate procedure. This procedure may be used to set the tunnel couplings in a large-scale quantum dot array from an arbitrary initial configuration to a target configuration and achieving orthogonal control at the same time.

The method may start with a step of determining a target configuration of tunnel couplings, e.g. a target configuration associated with a certain step in a quantum computation or simulation process. Further, an initial estimate for the lever arms for virtual barrier voltages B' (step **1002**) may be determined. Then, a tunneling coupling may be selected (step **1004**). This tunnel coupling $t_{ij}$ may be chosen e.g. randomly, as the first inter-dot tunnel coupling to tune and calibrate.

First the selected tunneling coupling $t_{ij}$ may be measured and tested if its value is sufficiently high for determining the crosstalk on $t_{ij}$ using the differential method. If this is not the case, $t_{ij}$ may be updated by using virtual gate $B'_{ij}$ to tune $t_{ij}$ above a threshold value, for example larger than 20$\mu$eV, at which the crosstalk on $t_{ij}$ can be accurately obtained using the differential method tuning its above. Preferably, virtual gate $B'_{ij}$ may be used to tune $t_{ij}$ to a target value. If $t_{ij}$ is sufficiently high, crosstalk contributions of virtual gates B' on $t_{ij}$ may be measured using the differential method (step **1012**). The measured crosstalk contributions may be used to determine crosstalk ratios of a crosstalk matrix (step 1014), which defines intermediate virtual gates in terms of virtual gates B'.

Based on the crosstalk matrix first intermediate virtual gates B*may be defined which are configured to compensate for crosstalk on $t_{ij}$ (step **1016**). Thereafter, a voltage value $\Delta B^*_{ij}$ may be determined for tuning $t_{ij}$ towards the target value using first intermediate virtual gate $B^*_{ij}$ (step **1018**). Then, based on the inverse of the crosstalk matrix a linear combination of physical gate voltages may be determined to tune intermediate virtual gate $B^*_{ij}$ based on voltage value $\Delta B^*_{ij}$ (step **1020**) so that tunnel coupling $t_{ij}$ is set to the target value (step **1022**). Thereafter, the next tunnel coupling may be process.

This process may be repeated for all tunnel couplings $t_{ij}$ in the array (step **1024**). For example, in a next iteration a further tunnel coupling, $t_{kl}$ of the quantum dot array may be selected and if that value is not sufficiently high for the differential method, $t_{kl}$ may be updated (according to steps **1006-1010**). For example, a first intermediate virtual gate $B^{*1}_{kl}$ may be used to tune tunnel coupling $t_{kl}$ above the characterization threshold without affecting tunnel coupling $t_{ij}$

because the first intermediate gates $B_{kl}^{*1}$ compensate for the crosstalk on $t_{ij}$.

Then, the crosstalk of $B^{*1}$ on $t_{kl}$ may be determined based on the differential method (step **1012**) and the crosstalk matrix may be updated on the basis of the cross-capacitance contributions that are derived from the differential method (step **1014**). The differential method may be similar to the steps **808** - **814** of **Fig. 8.** The differential method may include at least the application of a voltage perturbation $\delta B_{mn}^{*1}$ to intermediate virtual gate $B_{mn}^{*1}$ and measure the ratio $\frac{\partial t_{kl}}{\partial B_{mn}^{*1}}$ of a change in the tunnel coupling and the voltage perturbation of $\delta B^{*1}$.

The updated crosstalk matrix may then be used to define second intermediate virtual gates $B^{*2}$, which are configured to compensate for the crosstalk on $t_{ij}$ and $t_{kl}$ (according to step **1016**) If tunnel coupling $t_{kl}$ is not yet the desired value, than $t_{kl}$ may be tuned to the target value using its associated second intermediate tunnel gate $B_{kl}^{*2}$ .

Hence, for each subsequent $t_{ij}$ the intermediate virtual gates $B^*$ and the crosstalk matrix are updated to incorporate the crosstalk compensation for the tuned tunnel couplings $t_{ij}$. The intermediate virtual gates $B^*$ define the enhanced virtual gates $B^\dagger$ once all tunnel couplings $t_{ij}$ are calibrated (step **1026**),

Hence, in contrast to the procedure of **Fig. 8** and **9,** a first tunnel coupling $t_{ij}$ is tuned to a target value using virtual gate $B_{ij}'$ . Thereafter, the crosstalk of virtual gates $B'$ on tunnel coupling $t_{ij}$ are characterized, and intermediate virtual gates $B^*$, which only compensate for the crosstalk on $t_{ij}$, are defined. Thereafter, an intermediate virtual gate B* (which compensates for crosstalk on $t_{ij}$) is used to tune a second (nearby) tunnel coupling $t_{kl}$ to a target value without affecting the tuned tunnel coupling $t_{ij}$. Next, by calibrating the crosstalk on $t_{kl}$, the intermediate virtual gates $B^*$ may be updated to include crosstalk compensation for tunnel coupling $t_{kl}$. Repeating the procedure for each tunnel barrier, tunnel couplings can be tuned one-by-one to desired target values and enhanced virtual gates care obtained to orthogonally control the gates.

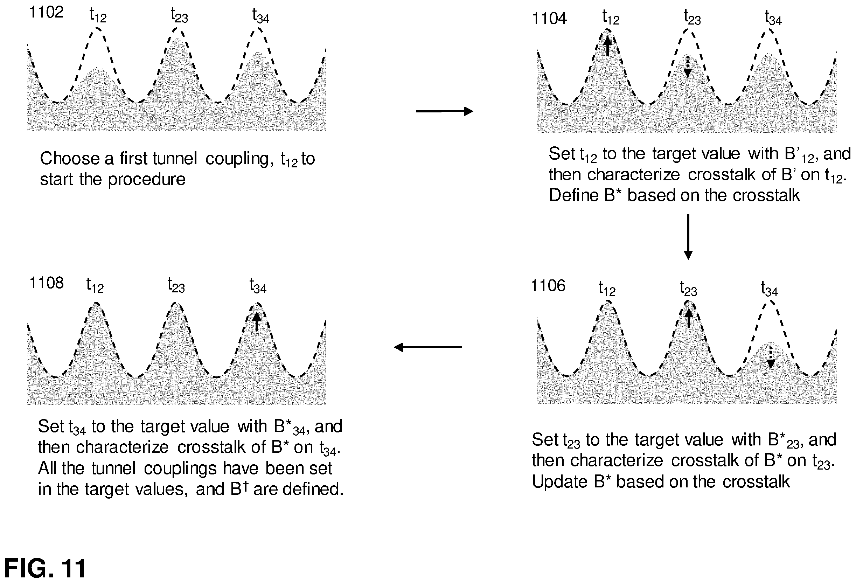

**Fig. 11** illustrates setting tunnel couplings to target values based on enhanced virtual gates according to another embodiment of the invention. A first tunnel coupling $t_{12}$ may be selected to start the calibration procedure, wherein tunnel coupling $t_{12}$ is set to the target value using virtual gate $B_{12}'$ and then the crosstalk of virtual gates $B'$ on $t_{12}$ is determined. Thereafter, intermediate virtual gates $B^*$ may be defined based on the determined crosstalk. This process may be repeated for $t_{23}$ and $t_{34}$ so that all tunnel couplings have been set to the target values and enhanced virtual gates $B^\dagger$ are defined that allow orthogonal control of the tunnel couplings.

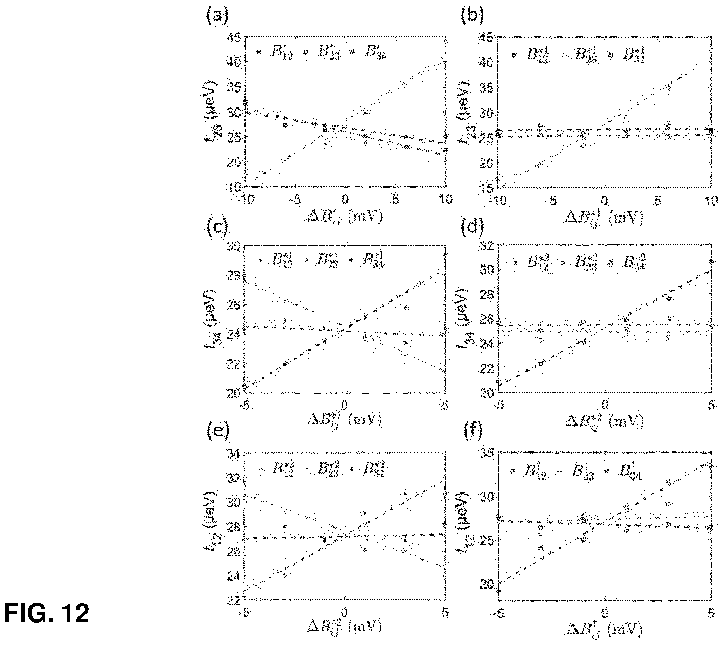

**Fig. 12A-12F** illustrate experimental data illustrating orthogonal control of tunnel couplings according to an embodiment of the invention. In particular, the experimental data depicted in the figures are associated with tunnel coupling control procedure wherein tunnel couplings of a quantum dot array may be tuned from an arbitrary initial configuration to a target configuration, for example, as target configuration wherein all of the tunnel couplings are tuned to ~25μeV. Further, the arbitrary initial condition of the tunnel couplings may be $(t_{12}, t_{23}, t_{34})$ = (6.1,25.9,8.8) (in μeV).

Then, after defining virtual gates $P',B'$ based on dot potential cross-capacitance contributions as described with reference to equation (1), the procedure may select a first tunnel coupling $t_{23}$ to start the tuning and calibration process.

**Fig. 12A** shows the crosstalk of the virtual gates $B'$ on tunnel coupling $t_{23}$. Based on the characterized crosstalk, a first tunnel coupling crosstalk matrix may define the relation between intermediate virtual gates $B^{*1}$ and virtual gates $B'$, wherein intermediate virtual gates $B^{*1}$ are configured to compensate for crosstalk on $t_{23}$:

$$\begin{pmatrix} B_{12}^{*1} \\ B_{23}^{*1} \\ B_{34}^{*1} \end{pmatrix} = \begin{pmatrix} 1 & 0 & 0 \\ -0.36 & 1 & -0.24 \\ 0 & 0 & 1 \end{pmatrix} \begin{pmatrix} B_{12}' \\ B_{23}' \\ B_{34}' \end{pmatrix}$$

As shown in **Fig. 12B,** the crosstalk on $t_{23}$ by the first intermediate virtual gates $B^{*1}$ is below 2%, showing that the crosstalk compensation on $t_{23}$ for the first intermediate virtual gates works well.

Subsequently, a second tunneling coupling $t_{34}$ may be tuned to 24.7 μeV using the associated first intermediate virtual gate $B_{34}^{*1}$ ( $\Delta B_{34}^{*1} = 105$ mV ). Since first intermediate virtual gate $B_{34}^{*1}$ includes the compensation for crosstalk on the tuned tunneling coupling $t_{23}$, changing this first intermediate virtual gate $B_{34}^{*1}$ by 105 mV only affects tunneling

coupling $t_{23}$ by 0.7 $\mu$eV (from 25.9 $\mu$eV to 26.6 $\mu$eV). Thus, tunnel coupling $t_{34}$ can be tuned using its associated first intermediate virtual gate $B^{*1}_{34}$ without affecting the already tuned tunnel coupling $t_{23}$.

**Fig. 12C** shows the crosstalk of the virtual gates $B^{*1}$ on tunneling coupling $t_{34}$. A first updated crosstalk matrix may be defined by multiplying a second crosstalk matrix describing the crosstalk of the first intermediate virtual gate $B^{*1}$ on $t_{34}$ with the first crosstalk matrix and then normalizing each row so that the diagonal elements are one. The first updated crosstalk matrix may be used to define second intermediate virtual gates $B^{*2}$ which are configured to compensate for the crosstalk on the tuned tunneling couplings $t_{23}$ and $t_{34}$. The first updated crosstalk matrix defines the relation between the second intermediate virtual gates $B^{*2}$ and the virtual gates $B'$:

$$\begin{pmatrix} B^{*2}_{12} \\ B^{*2}_{23} \\ B^{*2}_{34} \end{pmatrix} = \begin{pmatrix} 1 & 0 & 0 \\ -0.36 & 1 & -0.24 \\ 0.23 & -0.64 & 1 \end{pmatrix} \begin{pmatrix} B'_{12} \\ B'_{23} \\ B'_{34} \end{pmatrix}$$

As shown in **Fig. 12D,** when using the second intermediate virtual gates $B^{*2}$, the crosstalk on the tuned tunnel coupling $t_{23}$ and $t_{34}$ are suppressed to below 1%.

Finally, the third tunnel coupling $t_{12}$ may be tuned to 27.7 $\mu$eV using second intermediate virtual gate $B^{*2}_{12}$ ($\Delta B^{*2}_{12} = 100\,\text{mV}$). Again, since second intermediate virtual gate $B^{*2}_{12}$ includes the compensation for crosstalk on tuned tunnel coupling $t_{23}$ as well, changing second intermediate virtual gate $B^{*2}_{12}$ by 100 mV only affects $t_{23}$ by 2.4 $\mu$eV (from 26.6 $\mu$eV to 24.2 $\mu$eV).

**Fig. 12E** shows the crosstalk of the virtual gates $B^{*2}$ on tunneling coupling $t_{12}$. A second updated crosstalk matrix may be determined by multiplying a third crosstalk matrix describing the crosstalk of the second intermediate virtual gate $B^{*2}$ on $t_{12}$ with the first updated crosstalk matrix and then normalizing each row so that the diagonal elements are one. This second updated crosstalk matrix may define the relation between the enhanced virtual gates $B^{\dagger}$ and virtual gates $B'$ which now includes copensation for the crosstalk on all the tunnel couplings:

$$\begin{pmatrix} B^{\dagger}_{12} \\ B^{\dagger}_{23} \\ B^{\dagger}_{34} \end{pmatrix} = \begin{pmatrix} 1 & -0.84 & 0.20 \\ -0.36 & 1 & -0.24 \\ 0.23 & -0.64 & 1 \end{pmatrix} \begin{pmatrix} B'_{12} \\ B'_{23} \\ B'_{34} \end{pmatrix}$$

As shown in **Fig. 12F,** when using the enhanced virtual gates $B^{\dagger}$, the crosstalk on tunnel coupling $t_{12}$ is reduced to below 6%.

Based on the above-described tune and calibrate steps, the tunnel couplings have been tuned from an initial configuration where $(t_{12}, t_{23}, t_{34})$ = (6.1,25.9,8.8) to (27.7,24.2,24.7), which is close to the target (25,25,25). The tune-and-calibrate procedure thus allows an arbitrary initial condition to be tuned to a target condition. Moreover, the enhanced virtual gates $B^{\dagger}$ include the compensation for the cross-talk on all the tunnel couplings, so one can in principle use $B^{\dagger}$ to orthogonally tune the tunnel couplings to other configurations provided that the crosstalk ratios remain substantially the same.

Crosstalk factors $\Lambda$ for $P'$ since $\Lambda^{ij}_i$ and $\Lambda^{ij}_j$ cannot be independently measured using our method. Hence, varying $P^{\dagger}$ would affect tunnel couplings. To perform a complete crosstalk calibration, one may measure the exchange coupling, $J_{ij}$, as a function of $P'_i$ and $P'_j$ independently using a spin-funnel as described in the article by Petta, J.R. et al, Coherent manipulation of coupled electron spins in semiconductor quantum dots, Science 309, 2180-2184(2005) or photon-assisted tunnel as described by Oosterkamp. T.H. et al. , Microwave spectroscopy of a quantum-dot molecule, Nature 395, 873 (1998), and then obtain $t_{ij}$ from $J_{ij}$. By doing so, all the nonzero elements in the cross-capacitance matrix in equation (3) may be obtained, which will make the tuning of dot potentials and tunnel couplings fully orthogonal.

It is submitted that the quantum dot array depicted in the figures of this application are is just an example of an array that can be used with the embodiments described in this application. The embodiments described in this application may be implemented on the basis of any type of gated quantum dot array architecture, including 1D, 2D or 3D quantum dot arrays.

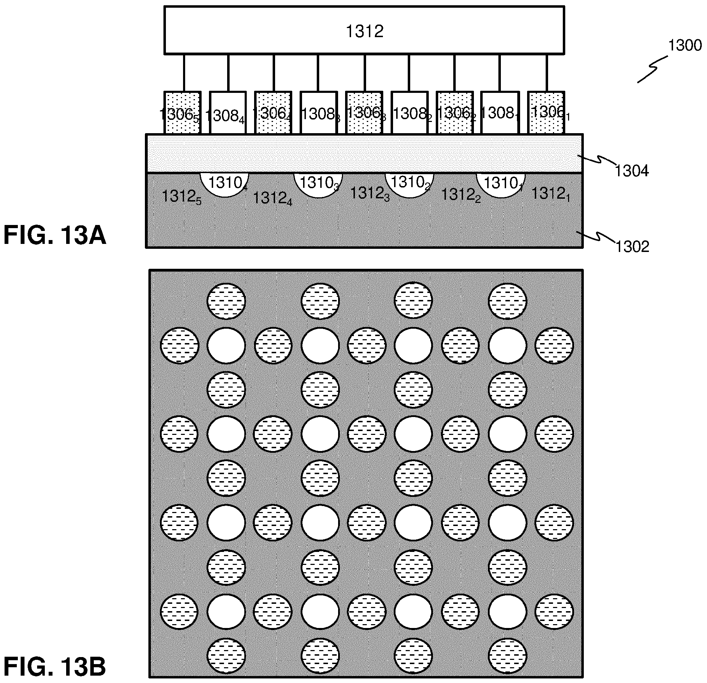

**FIG. 13A** and **13B** depict the side view and top view of a system comprising two-dimensional quantum-dot array **1300** connected to electronics **1312,** e.g. a computer or a controller, for executing the readout schemes as described in this application. In particular, **FIG. 13A** depicts the side view of a semiconducting structure, including a semiconductor substrate **1302.** An insulating layer **1304** formed over the top surface of the substrate isolates gates from quantum dot regions **1310,** which are formed in the substrate. The quantum dots may be any type of structure suitable for functioning as a quantum dot, a donor site, a depleted 2D, etc. The potential of the quantum dots may be controlled by plunger gates $1308_{1-4}$ and the tunnel couplings between dots are controlled by the barrier gates $1306_{1-5}$. The plunger and barrier gates are patterned so that a two-dimensional quantum-dot array can be formed by applying voltages to these gates. For example, in case of the substrate includes a 2DEG heterostructure, the voltages on the gates may deplete the 2DEG and shape the 2DEG in to a 2D quantum-dot array. This way, as shown in **Fig. 13B,** a regular 2D array of quantum dots may be formed under the plunger gates and tunneling barriers between the quantum dots may be formed under the barrier gates.

Other types of 2D quantum dot array architectures may be used as well, for example, the cross-bar design 2D quantum dot arrays as described in the article by Ruoyu Li et al, A crossbar network for silicon quantum dot qubits, Science Advances, Vol. 4,no. 7, 2018. In this architectures. A plurality of quantum dots may be controlled by one gate electrode. Hence, in an embodiment, one physical gate of a quantum dot may be configured to control a coupling, a tunnel coupling, an exchange coupling or a capacitive coupling of a plurality quantum dots and/or a dot potential of a plurality of quantum dots. Similarly, the virtual gates, the intermediate virtual gates and the enhanced virtual gates described with reference to the embodiments in this application may be configured to control a coupling of a plurality of quantum dots, while compensating at least part of the crosstalk due cross-capacitances in the quantum dot array.

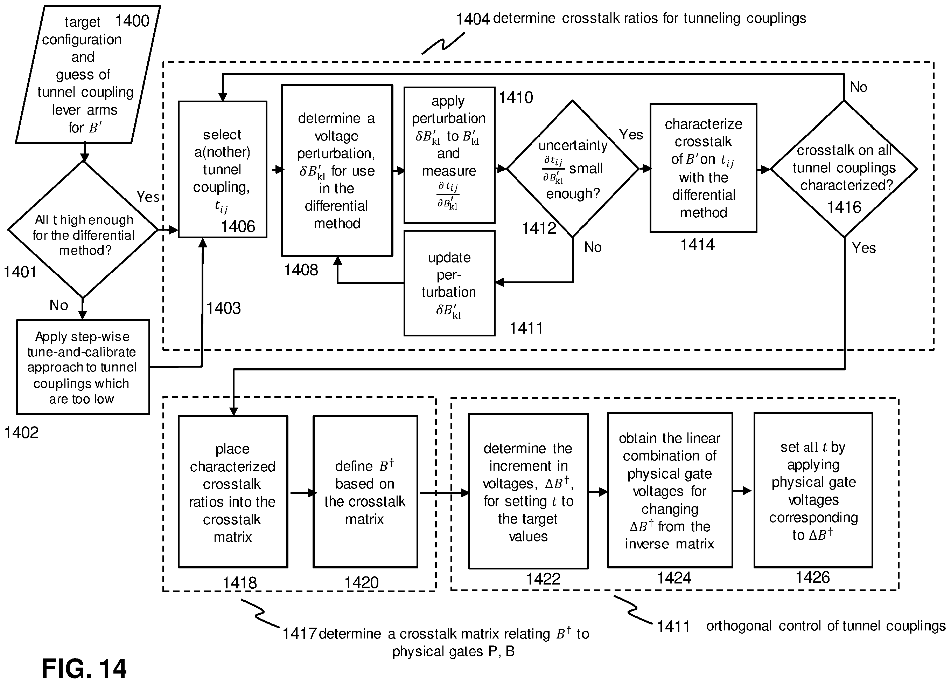

**Fig. 14** depicts orthogonal control of tunnel couplings according to another embodiment of the invention. In this embodiment, a combination of the control scheme of **Fig. 8** and **Fig. 10** may be used. The method may start with a step of determining a target configuration of tunnel couplings, e.g. a target configuration associated with a certain step in a quantum computation or simulation process. Further, an initial estimate for the lever arms for virtual barrier voltages *B'* (step **1400)** may be determined. Then, the tunnel couplings may be measured and checked if the values are sufficiently high enough for determining crosstalk ratios based on the differential method. For example, it may be checked if the values of the tunneling couplings are above or below a certain threshold value (step **1401).** If the values are high enough, then the crosstalk ratios for the tunneling couplings and subsequent enhanced virtual gates may be determined based on the scheme of steps **1404-1426,** which are identical to steps **804-826** of **Fig. 8** (representing the crosstalk calibration method in one go).

If some of the tunnel couplings are not sufficiently high (below a certain threshold), these values may be tuned and calibrated using the scheme described with reference to **Fig. 10** (representing the step-wise tune-and-calibrate method). Once these tunnel values are tuned and calibrated, the calibration process may continue based on the scheme defined by steps **1404-1426,** the one-go calibration method.

While the schemes of **Fig. 4-12** and **14** are described for controlling tunnel couplings in quantum dots it is submitted that other types of couplings such as co-tunnelling coupling, exchange coupling and/or a capacitive coupling can be controlled as well based on the embodiments described in this application.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

**Claims**

1. A computer-implemented method of controlling coupling of at least two quantum dots ($102_{1-4}$) in a quantum dot array (1300), the method comprising:

determining dot potential crosstalk ratios of physical gates ($104_{1-4}$,$106_{1-3}$, $1306_{1-5}$,$1308_{1-4}$) coupling to dot

potentials of quantum dots ($102_{1-4}$) in the quantum dot array (1300), the dot potential crosstalk ratios defining of a dot potential crosstalk matrix, the inverse of the dot potential crosstalk matrix defining virtual gates as a linear combination of the physical gates ($104_{1-4}$,$106_{1-3}$, $1306_{1-5}$,$1308_{1-4}$) for orthogonal control of the dot potentials, wherein determining the dot potential crosstalk ratios include: controlling a controller (1312) of the quantum dot array (1300) to apply a voltage to one of the physical gates ($104_{1-4}$,$106_{1-3}$, $1306_{1-5}$,$1308_{1-4}$) and to measure cross-talk effects of the applied voltage to the dot potentials of the quantum dots ($102_{1-4}$) and calculate the ratios between cross-talk effects from different physical gates ($104_{1-4}$,$106_{1-3}$,$1306_{1-5}$,$1308_{1-4}$); determining (304) coupling crosstalk ratios of the virtual gates coupling to dot couplings between one or more pairs of quantum dots ($102_{1-4}$) in the quantum dot array (1300), the coupling crosstalk ratios defining elements of a coupling crosstalk matrix, the inverse of the coupling crosstalk matrix defining enhanced virtual gates as a linear combination of the virtual gates for orthogonal control of the dot couplings; wherein the coupling crosstalk ratios are determined based on the ratios of partial derivatives of dot couplings between pairs of quantum dots ($102_{1-4}$) in the quantum dot array (1300) with respect to the virtual gate voltages, the determining of a partial derivative including: controlling the controller (1312) to apply a voltage perturbation to at least one of the virtual gates, while keeping the voltages on the other virtual gates constant and, in response to the voltage perturbation, to measure a change of the dot coupling of a pair of quantum dots ($102_{1-4}$) and fitting the change of the dot coupling to a linear function; and, controlling (308) the controller (1312) based on the enhanced virtual gates, the controlling including using the at least one of the enhanced virtual gates for applying a linear combination of gate voltages to the physical gates ($104_{1-4}$,$106_{1-3}$, $1306_{1-5}$,$1308_{1-4}$) to tune the coupling of the at least two quantum dots ($102_{1-4}$) to a target value.

2. Method according to claim 1 wherein the dot coupling between one or more pairs of quantum dots ($102_{1-4}$) is modelled as a single-variable function in which the variable is a linear combination of the virtual gates.

3. Method according to claims 1 or 2 wherein the virtual gates include one or more virtual barrier gates for controlling couplings of quantum dots ($102_{1-4}$) in the quantum dot array (1300); and/or, wherein the virtual gates include one or more virtual plunger gates for controlling dot potentials of one or more quantum dots ($102_{1-4}$) in the array (1300) of quantum dots.

4. Method according to any of claims 1-3 wherein the dot coupling of the at least two quantum dots ($102_{1-4}$) is at least one of: a tunnel coupling, a co-tunnelling coupling, an exchange coupling and/or a capacitive coupling.

5. Method according to any of claims 1-4 wherein the method further includes:
determining a combined crosstalk matrix based on the dot potential crosstalk matrix and the coupling crosstalk matrix, the inverse of the combined crosstalk matrix defining enhanced virtual gates as a linear combination of the physical gate voltages for orthogonal control of the couplings of the quantum dots ($102_{1-4}$) in the quantum dot array (1300).

6. Method according to claim 5 wherein controlling the coupling further includes:
determining a linear combination of physical gate voltages based on the inverse of the combined crosstalk matrix.

7. Method according to any of claims 1-4 wherein controlling the coupling further includes:

determining the inverse of the dot potential crosstalk matrix;
determining the inverse of the coupling crosstalk matrix; and,
determining a linear combination of physical gate voltages to control the dot coupling of the at least two quantum dots ($102_{1-4}$) based on the inverse of the coupling crosstalk matrix and the inverse of the dot potential crosstalk matrix.

8. Method according to any of claims 1-7, wherein the array (1300) of quantum dots is a one-dimensional array of quantum dots, a two-dimensional array of quantum dots or a three-dimensional array of quantum dots.

9. A computer for controlling a controller (1312) connectable to an array (1300) of quantum dots for controlling a coupling of at least two quantum dots ($102_{1-4}$) in the array (1300) of quantum dots, the computer being configured to:

determining dot potential crosstalk ratios of physical gates ($104_{1-4}$,$106_{1-3}$, $1306_{1-5}$,$1308_{1-4}$) coupling to dot potentials of quantum dots ($102_{1-4}$) in the quantum dot array (1300), the dot potential crosstalk ratios defining of a dot potential crosstalk matrix, the inverse of the dot potential crosstalk matrix defining virtual gates as a linear combination of the physical gates ($104_{1-4}$, $106_{1-3}$, $1306_{1-5}$, $1308_{1-4}$) for orthogonal control of the dot potentials, wherein determining the dot potential crosstalk ratios include: controlling the controller (1312) to apply a voltage to one of the physical gates ($104_{1-4}$, $106_{1-3}$, $1306_{1-5}$, $1308_{1-4}$) and to measure cross-talk effects of the applied voltage to the dot potentials of the quantum dots ($102_{1-4}$) and calculate the ratios between cross-talk effects from different physical gates ($104_{1-4}$, $106_{1-3}$, $1306_{1-5}$, $1308_{1-4}$);

determining coupling crosstalk ratios of the virtual gates coupling to dot couplings between one or more pairs of quantum dots ($102_{1-4}$) in the quantum dot array (1300), the coupling crosstalk ratios defining elements of a coupling crosstalk matrix, the inverse of the coupling crosstalk matrix defining enhanced virtual gates as a linear combination of the virtual gates for orthogonal control of the dot couplings; wherein the coupling crosstalk ratios are determined based on the ratios of partial derivatives of dot couplings between pairs of quantum dots ($102_{1-4}$) in the quantum dot array (1300) with respect to the virtual gate voltages, the determining of a partial derivative including: controlling the controller (1312) to apply a voltage perturbation to at least one of the virtual gates, while keeping the voltages on the other virtual gates constant and, in response to the voltage perturbation, to measure a change of the dot coupling of a pair of quantum dots ($102_{1-4}$) and fitting the change of the dot coupling to a linear function; and,

controlling the controller (1312) based on the enhanced virtual gates, the controlling including using the at least one of the enhanced virtual gates for applying a linear combination of gate voltages to the physical gates ($104_{1-4}$, $106_{1-3}$, $1306_{1-5}$, $1308_{1-4}$) to tune the coupling of the at least two quantum dots ($102_{1-4}$) to a target value.

10. A computer according to claim 9 wherein the dot coupling between one or more pairs of quantum dots ($102_{1-4}$) is modelled as a single-variable function in which the variable is a linear combination of the virtual gates.

11. A computer according to claims 9 or 10 wherein the virtual gates include one or more virtual barrier gates for controlling couplings of quantum dots ($102_{1-4}$) in the quantum dot array (1300); and/or, wherein the virtual gates include one or more virtual plunger gates for controlling dot potentials of one or more quantum dots ($102_{1-4}$) in the array (1300) of quantum dots.

12. A computer according to any of claims 9-11 wherein the coupling of the at least two quantum dots ($102_{1-4}$) is at least one of: a tunnel coupling, a co-tunnelling coupling, an exchange coupling parameter and/or a capacitive coupling.

13. A computer according to any of claims 9-12 wherein the computer is further configured to:

determining a combined crosstalk matrix based on the dot potential crosstalk matrix and the coupling crosstalk matrix, the inverse of the combined crosstalk matrix defining enhanced virtual gates as a linear combination of the physical gate voltages for orthogonal control of the couplings of the quantum dots ($102_{1-4}$) in the quantum dot array (1300); and, optionally,

determining a linear combination of physical gate voltages based on the inverse of the combined crosstalk matrix.

14. A computer according to according to any of claims 9-12 wherein controlling the coupling further includes:

determining the inverse of the dot potential crosstalk matrix;
determining an inverse of the coupling crosstalk matrix; and,
determining a linear combination of physical gate voltages to control the dot coupling of the at least two quantum dots ($102_{1-4}$) based on the inverse of the coupling crosstalk and the inverse of the dot potential crosstalk matrix.

15. Computer program product comprising software code portions that, when executed on a computer, perform the method steps according to any of claims 1-8.

**Patentansprüche**

1. Computer-implementiertes Verfahren zur Steuerung der Kopplung von zumindest zwei Quantenpunkten ($102_{1-4}$) in einem Quantenpunkt-Array (1300), wobei das Verfahren aufweist:

Bestimmen von Punktpotential-Übersprechverhältnissen von physikalischen Gates ($104_{1-4}$, $106_{1-3}$, $1306_{1-5}$, $1308_{1-4}$), die an Punktpotentiale von Quantenpunkten ($102_{1-4}$) in dem Quantenpunkt-Array (1300) koppeln, wobei die Punktpotential-Übersprechverhältnisse eine Punktpotential-Übersprechmatrix definieren, wobei die Inverse der Punktpotential-Übersprechmatrix virtuelle Gates als eine Linearkombination der physikalischen Gates ($104_{1\text{-}4}$, $106_{1\text{-}3}$, $1306_{1\text{-}5}$, $1308_{1\text{-}4}$) zur orthogonalen Steuerung der Punktpotentiale definiert, wobei das Bestimmen der Punktpotential-Übersprechverhältnisse aufweist: Steuern eines Controllers (1312) des Quantenpunkt-Arrays (1300), um eine Spannung an eines der physikalischen Gates ($104_{1\text{-}4}$, $106_{1\text{-}3}$, $1306_{1\text{-}5}$, $1308_{1\text{-}4}$) anzulegen und die Übersprecheffekte der angelegten Spannung auf die Punktpotentiale der Quantenpunkte ($102_{1\text{-}4}$) zu messen und die Verhältnisse zwischen den Übersprecheffekten von verschiedenen physikalischen Gates ($104_{1\text{-}4}$, $106_{1\text{-}3}$, $1306_{1\text{-}5}$, $1308_{1\text{-}4}$) zu berechnen;

Bestimmen von Kopplungsübersprechverhältnissen der virtuellen Gates, die an Punktkopplungen zwischen einem oder mehreren Paaren von Quantenpunkten ($102_{1\text{-}4}$) in dem Quantenpunkt-Array (1300) koppeln, wobei die Kopplungsübersprechverhältnisse Elemente einer Kopplungsübersprechmatrix definieren, wobei die Inverse der Kopplungsübersprechmatrix verbesserte virtuelle Gates als eine Linearkombination der virtuellen Gates zur orthogonalen Steuerung der Punktkopplungen definiert; wobei die Kopplungsübersprechverhältnisse auf der Grundlage der Verhältnisse von partiellen Ableitungen von Punktkopplungen zwischen Paaren von Quantenpunkten ($102_{1\text{-}4}$) in dem Quantenpunkt-Array (1300) bezüglich der virtuellen Gate-Spannungen bestimmt werden, wobei das Bestimmen einer partiellen Ableitung aufweist: Steuern des Controllers (1312), um eine Spannungsstörung an zumindest eines der virtuellen Gates anzulegen, während die Spannungen an den anderen virtuellen Gates konstant gehalten werden, und im Ansprechen auf die Spannungsstörung eine Änderung der Punktkopplung eines Paars von Quantenpunkten ($102_{1\text{-}4}$) zu messen, und Anfitten der Änderung der Punktkopplung an eine lineare Funktion; und,

Steuern (308) des Controllers (1312) auf der Grundlage der verbesserten virtuellen Gates, wobei das Steuern die Verwendung des zumindest einen der verbesserten virtuellen Gates zum Anlegen einer Linearkombination von Gate-Spannungen an die physikalischen Gates ($104_{1\text{-}4}$, $106_{1\text{-}3}$, $1306_{1\text{-}5}$, $1308_{1\text{-}4}$) aufweist, um die Kopplung der zumindest zwei Quantenpunkte ($102_{1\text{-}4}$) auf einen Zielwert abzustimmen.

2. Verfahren nach Anspruch 1, wobei die Punktkopplung zwischen einem oder mehreren Paaren von Quantenpunkten ($102_{1\text{-}4}$) als eine Ein-Variablen-Funktion modelliert wird, in der die Variable eine Linearkombination der virtuellen Gates ist.

3. Verfahren nach Anspruch 1 oder 2, wobei die virtuellen Gates ein oder mehrere virtuelle Barrieren-Gates zum Steuern von Kopplungen von Quantenpunkten ($102_{1\text{-}4}$) in dem Quantenpunkt-Array (1300) aufweisen; und/oder, wobei die virtuellen Gates ein oder mehrere virtuelle Plunger-Gates zum Steuern von Punktpotentialen eines oder mehrerer Quantenpunkte ($102_{1\text{-}4}$) in dem Array (1300) von Quantenpunkten aufweisen.

4. Verfahren nach irgendeinem der Ansprüche 1-3, wobei die Punktkopplung der zumindest zwei Quantenpunkte ($102_{1\text{-}4}$) zumindest eine von folgenden ist: eine Tunnelkopplung, eine Co-Tunnelkopplung, eine Austauschkopplung und/oder eine kapazitive Kopplung.

5. Verfahren nach irgendeinem der Ansprüche 1-4, wobei das Verfahren weiterhin aufweist:
Bestimmen einer kombinierten Übersprechmatrix auf der Grundlage der Punktpotential-Übersprechmatrix und der Kopplungsübersprechmatrix, wobei die Inverse der kombinierten Übersprechmatrix verbesserte virtuelle Gates als eine Linearkombination der physikalischen Gate-Spannungen zur orthogonalen Steuerung der Kopplungen der Quantenpunkte ($102_{1\text{-}4}$) in dem Quantenpunkt-Array (1300) definiert.

6. Verfahren nach Anspruch 5, wobei das Steuern der Kopplung weiterhin aufweist:
Bestimmen einer Linearkombination von physikalischen Gate-Spannungen auf der Grundlage der Inversen der kombinierten Übersprechmatrix.

7. Verfahren nach irgendeinem der Ansprüche 1-4, wobei das Steuern der Kopplung weiterhin aufweist:

Bestimmen der Inversen der Punktpotential-Übersprechmatrix;
Bestimmen der Inversen der Kopplungsübersprechmatrix; und
Bestimmen einer Linearkombination von physikalischen Gate-Spannungen, um die Punktkopplung der zumindest zwei Quantenpunkte ($102_{1\text{-}4}$) auf der Grundlage der Inversen der Kopplungsübersprechmatrix und der Inversen der Punktpotential-Übersprechmatrix zu steuern.

8. Verfahren nach irgendeinem der Ansprüche 1-7, wobei das Array (1300) von Quantenpunkten ein eindimensionales Array von Quantenpunkten, ein zweidimensionales Array von Quantenpunkten, oder ein dreidimensionales Array von Quantenpunkten ist.

9. Computer zum Steuern eines Controllers (1312), der mit einem Array (1300) von Quantenpunkten zum Steuern einer Kopplung von zumindest zwei Quantenpunkten ($102_{1-4}$) in dem Array (1300) von Quantenpunkten verbindbar ist, wobei der Computer zu Folgendem konfiguriert ist:

Bestimmen von Punktpotential-Übersprechverhältnissen von physikalischen Gates ($104_{1-4}$, $106_{1-3}$, $1306_{1-5}$, $1308_{1-4}$), die an Punktpotentiale von Quantenpunkten ($102_{1-4}$) in dem Quantenpunkt-Array (1300) koppeln, wobei die Punktpotential-Übersprechverhältnisse eine Punktpotential-Übersprechmatrix definieren, wobei die Inverse der Punktpotential-Übersprechmatrix virtuelle Gates als eine Linearkombination der physikalischen Gates ($104_{1-4}$, $106_{1-3}$, $1306_{1-5}$, $1308_{1-4}$) zur orthogonalen Steuerung der Punktpotentiale definiert, wobei das Bestimmen der Punktpotential-Übersprechverhältnisse aufweist: Steuern des Controllers (1312), um eine Spannung an eines der physikalischen Gates ($104_{1-4}$, $106_{1-3}$, $1306_{1-5}$, $1308_{1-4}$) anzulegen und Überspracheffekte der angelegten Spannung auf die Punktpotentiale der Quantenpunkte ($102_{1-4}$) zu messen und die Verhältnisse zwischen Überspracheffekten von verschiedenen physikalischen Gates ($104_{1-4}$, $106_{1-3}$, $1306_{1-5}$, $1308_{1-4}$) zu berechnen;
Bestimmen von Kopplungsübersprechverhältnissen der virtuellen Gates, die an Punktkopplungen zwischen einem oder mehreren Paaren von Quantenpunkten ($102_{1-4}$) in dem Quantenpunkt-Array (1300) koppeln, wobei die Kopplungsübersprechverhältnisse Elemente einer Kopplungsübersprechmatrix definieren, wobei die Inverse der Kopplungsübersprechmatrix verbesserte virtuelle Gates als eine Linearkombination der virtuellen Gates zum orthogonalen Steuern der Punktkopplungen definiert; wobei die Kopplungsübersprechverhältnisse auf der Grundlage der Verhältnisse von partiellen Ableitungen von Punktkopplungen zwischen Paaren von Quantenpunkten ($102_{1-4}$) in dem Quantenpunkt-Array (1300) bezüglich der virtuellen Gate-Spannungen bestimmt werden, wobei das Bestimmen einer partiellen Ableitung aufweist: Steuern des Controllers (1312), um eine Spannungsstörung an zumindest eines der virtuellen Gates anzulegen, während die Spannungen der anderen virtuellen Gates konstant gehalten werden, und im Ansprechen auf die Spannungsstörung eine Änderung der Punktkopplung eines Paars von Quantenpunkten ($102_{1-4}$) zu messen, und Anfitten der Änderung der Punktkopplung an eine lineare Funktion; und
Steuern des Controllers (1312) auf der Grundlage der verbesserten virtuellen Gates, wobei das Steuern die Verwendung des zumindest einen der verbesserten virtuellen Gates zum Anlegen einer Linearkombination von Gate-Spannungen an die physikalischen Gates ($104_{1-4}$, $106_{1-3}$, $1306_{1-5}$, $1308_{1-4}$) aufweist, um die Kopplung der zumindest zwei Quantenpunkte ($102_{1-4}$) auf einen Zielwert abzustimmen.

10. Computer nach Anspruch 9, wobei die Punktkopplung zwischen einem oder mehreren Paaren von Quantenpunkten ($102_{1-4}$) als eine Ein-Variablen-Funktion modelliert ist, in der die Variable eine Linearkombination der virtuellen Gates ist.

11. Computer nach Anspruch 9 oder 10, wobei die virtuellen Gates ein oder mehrere virtuelle Barrieren-Gates zum Steuern von Kopplungen von Quantenpunkten ($102_{1-4}$) in dem Quantenpunkt-Array (1300) aufweisen; und/oder, wobei die virtuellen Gates ein oder mehrere virtuelle Plunger-Gates zum Steuern von Punktpotentialen eines oder mehrerer Quantenpunkte ($102_{1-4}$) in dem Array (1300) von Quantenpunkten aufweisen.

12. Computer nach irgendeinem der Ansprüche 9-11, wobei die Kopplung der zumindest zwei Quantenpunkte ($102_{1-4}$) zumindest eine von folgenden ist: eine Tunnelkopplung, eine Co-Tunnelkopplung, ein Austauschkopplungsparameter und/oder eine kapazitive Kopplung.

13. Computer nach irgendeinem der Ansprüche 9-12, wobei der Computer weiterhin zu Folgendem konfiguriert ist:

Bestimmen einer kombinierten Übersprechmatrix auf der Grundlage der Punktpotential-Übersprechmatrix und der Kopplungsübersprechmatrix, wobei die Inverse der kombinierten Übersprechmatrix verbesserte virtuelle Gates als eine Linearkombination der physikalischen Gate-Spannungen zur orthogonalen Steuerung der Kopplungen der Quantenpunkte ($102_{1-4}$) in dem Quantenpunkt-Array (1300) definiert; und, optional,
Bestimmen einer Linearkombination von physikalischen Gate-Spannungen auf der Grundlage der Inversen der kombinierten Übersprechmatrix.

14. Computer nach irgendeinem der Ansprüche 9-12, wobei das Steuern der Kopplung weiterhin aufweist:

Bestimmen der Inversen der Punktpotential-Übersprechmatrix;

Bestimmen einer Inversen der Kopplungsübersprechmatrix; und,

Bestimmen einer Linearkombination von physikalischen Gate-Spannungen, um die Punktkopplung der zumindest zwei Quantenpunkte ($102_{1-4}$) auf der Grundlage der Inversen der Kopplungsübersprechmatrix und der Inversen der Punktpotential-Übersprechmatrix zu steuern.

15. Computerprogrammprodukt mit Softwarecodeabschnitten, die, wenn sie auf einem Computer ausgeführt werden, die Verfahrensschritte gemäß irgendeinem der Ansprüche 1-8 ausführen.

**Revendications**

1. Procédé mis en œuvre par ordinateur de commande de couplage d'au moins deux points quantiques ($102_{1-4}$) dans un réseau de points quantiques (1300), le procédé comprenant :

   la détermination de rapports de diaphonie de potentiels de points de grilles physiques ($104_{1-4}$, $106_{1-3}$, $1306_{1-5}$, $1308_{1-4}$) se couplant à des potentiels de points de points quantiques ($102_{1-4}$) dans le réseau de points quantiques (1300), les rapports de diaphonie de potentiels de points définissant une matrice de diaphonie de potentiels de points, l'inverse de la matrice de diaphonie de potentiels de points définissant des grilles virtuelles en tant qu'une combinaison linéaire des grilles physiques ($104_{1-4}$, $106_{1-3}$, $1306_{1-5}$, $1308_{1-4}$) pour une commande orthogonale des potentiels de points, dans lequel la détermination des rapports de diaphonie de potentiels de points comporte : la commande à un dispositif de commande (1312) du réseau de points quantiques (1300) d'appliquer une tension à l'une des grilles physiques ($104_{1-4}$, $106_{1-3}$, $1306_{1-5}$, $1308_{1-4}$) et de mesurer des effets de diaphonie de la tension appliquée aux potentiels de points des points quantiques ($102_{1-4}$) et de calculer les rapports entre des effets de diaphonie de différentes grilles physiques ($104_{1-4}$, $106_{1-3}$, $1306_{1-5}$, $1308_{1-4}$) ;

   la détermination (304) de rapports de diaphonie de couplage des grilles virtuelles se couplant à des couplages de points entre une ou plusieurs paires de points quantiques ($102_{1-4}$) dans le réseau de points quantiques (1300), les rapports de diaphonie de couplage définissant des éléments d'une matrice de diaphonie de couplage, l'inverse de la matrice de diaphonie de couplage définissant des grilles virtuelles améliorées en tant qu'une combinaison linéaire des grilles virtuelles pour une commande orthogonale des couplages de points ; dans lequel les rapports de diaphonie de couplage sont déterminés sur la base des rapports de dérivées partielles de couplages de points entre des paires de points quantiques ($102_{1-4}$) dans le réseau de points quantiques (1300) par rapport à des tensions de grilles virtuelles, la détermination d'une dérivée partielle comportant : la commande au dispositif de commande (1312) d'appliquer une perturbation de tension à au moins l'une des grilles virtuelles, tout en maintenant les tensions constantes sur les autres grilles virtuelles et, en réponse à la perturbation de tension, de mesurer un changement du couplage de points d'une paire de points quantiques ($102_{1-4}$) et l'ajustement du changement du couplage de points à une fonction linéaire ; et

   la commande (308) du dispositif de commande (1312) sur la base des grilles virtuelles améliorées, la commande comportant l'utilisation de l'au moins une des grilles virtuelles améliorées pour appliquer une combinaison linéaire de tensions de grilles aux grilles physiques ($104_{1-4}$, $106_{1-3}$, $1306_{1-5}$, $1308_{1-4}$) pour accorder le couplage des au moins deux points quantiques ($102_{1-4}$) à une valeur cible.

2. Procédé selon la revendication 1, dans lequel le couplage de points entre une ou plusieurs paires de points quantiques ($102_{1-4}$) est modélisé en tant qu'une fonction à variable unique dans laquelle la variable est une combinaison linéaire des grilles virtuelles.

3. Procédé selon la revendication 1 ou 2, dans lequel les grilles virtuelles comportent une ou plusieurs grilles de barrières virtuelles pour commander des couplages de points quantiques ($102_{1-4}$) dans le réseau de points quantiques (1300) ; et/ou dans lequel les grilles virtuelles comportent une ou plusieurs grilles de plongeurs virtuelles pour commander des potentiels de points d'un ou plusieurs points quantiques ($102_{1-4}$) dans le réseau de points quantiques (1300).

4. Procédé selon l'une quelconque des revendications 1 à 3, dans lequel le couplage de points des au moins deux points quantiques ($102_{1-4}$) est au moins l'un parmi : un couplage de tunnel, un couplage de co-tunnelisation, un couplage d'échange et/ou un couplage capacitif.

5. Procédé selon l'une quelconque des revendications 1 à 4, dans lequel le procédé comporte en outre :
   la détermination d'une matrice de diaphonie combinée sur la base de la matrice de diaphonie de potentiels de points et de la matrice de diaphonie de couplage, l'inverse de la matrice de diaphonie combinée définissant des grilles virtuelles améliorées en tant qu'une combinaison linéaire des tensions de grilles physiques pour une commande orthogonale des couplages des points quantiques ($102_{1-4}$) dans le réseau de points quantiques ($1300$).

6. Procédé selon la revendication 5, dans lequel la commande du couplage comporte en outre :

la détermination d'une combinaison linéaire de tensions de grilles physiques sur la base de l'inverse de la matrice de diaphonie combinée.

7. Procédé selon l'une quelconque des revendications 1 à 4, dans lequel la commande du couplage comporte en outre :

la détermination de l'inverse de la matrice de diaphonie de potentiels de points ;
la détermination de l'inverse de la matrice de diaphonie de couplage ; et
la détermination d'une combinaison linéaire de tensions de grilles physiques pour commander le couplage de points des au moins deux points quantiques ($102_{1-4}$) sur la base de l'inverse de la matrice de diaphonie de couplage et de l'inverse de la matrice de diaphonie de potentiels de points.

8. Procédé selon l'une quelconque des revendications 1 à 7, dans lequel le réseau de points quantiques ($1300$) est un réseau unidimensionnel de points quantiques, un réseau bidimensionnel de points quantiques ou un réseau tridimensionnel de points quantiques.

9. Ordinateur pour commander un dispositif de commande ($1312$) pouvant être connecté à un réseau de points quantiques ($1300$) pour commander un couplage d'au moins deux points quantiques ($102_{1-4}$) dans le réseau de points quantiques ($1300$), l'ordinateur étant configuré pour :

déterminer des rapports de diaphonie de potentiels de points de grilles physiques ($104_{1-4}$, $106_{1-3}$, $1306_{1-5}$, $1308_{1-4}$) se couplant à des potentiels de points de points quantiques ($102_{1-4}$) dans le réseau de points quantiques ($1300$), les rapports de diaphonie de potentiels de points définissant une matrice de diaphonie de potentiels de points, l'inverse de la matrice de diaphonie de potentiels de points définissant des grilles virtuelles en tant qu'une combinaison linéaire des grilles physiques ($104_{1-4}$, $106_{1-3}$, $1306_{1-5}$, $1308_{1-4}$) pour une commande orthogonale des potentiels de points, dans lequel la détermination des rapports de diaphonie de potentiels de points comporte : la commande au dispositif de commande ($1312$) d'appliquer une tension à l'une des grilles physiques ($104_{1-4}$, $106_{1-3}$, $1306_{1-5}$, $1308_{1-4}$) et de mesurer des effets de diaphonie de la tension appliquée aux potentiels de points des points quantiques ($102_{1-4}$) et de calculer les rapports entre des effets de diaphonie de différentes grilles physiques ($104_{1-4}$, $106_{1-3}$, $1306_{1-5}$, $1308_{1-4}$) ;
déterminer des rapports de diaphonie de couplage des grilles virtuelles se couplant à des couplages de points entre une ou plusieurs paires de points quantiques ($102_{1-4}$) dans le réseau de points quantiques ($1300$), les rapports de diaphonie de couplage définissant des éléments d'une matrice de diaphonie de couplage, l'inverse de la matrice de diaphonie de couplage définissant des grilles virtuelles améliorées en tant qu'une combinaison linéaire des grilles virtuelles pour une commande orthogonale des couplages de points ; dans lequel les rapports de diaphonie de couplage sont déterminés sur la base des rapports de dérivées partielles de couplages de points entre des paires de points quantiques ($102_{1-4}$) dans le réseau de points quantiques ($1300$) par rapport à des tensions de grilles virtuelles, la détermination d'une dérivée partielle comportant : la commande au dispositif de commande ($1312$) d'appliquer une perturbation de tension à au moins l'une des grilles virtuelles, tout en maintenant les tensions constantes sur les autres grilles virtuelles et, en réponse à la perturbation de tension, de mesurer un changement du couplage de points d'une paire de points quantiques ($102_{1-4}$) et l'ajustement du changement du couplage de points à une fonction linéaire ; et
commander le dispositif de commande ($1312$) sur la base des grilles virtuelles améliorées, la commande comportant l'utilisation de l'au moins une des grilles virtuelles améliorées pour appliquer une combinaison linéaire de tensions de grilles aux grilles physiques ($104_{1-4}$, $106_{1-3}$, $1306_{1-5}$, $1308_{1-4}$) pour accorder le couplage des au moins deux points quantiques ($102_{1-4}$) à une valeur cible.

10. Ordinateur selon la revendication 9, dans lequel le couplage de points entre une ou plusieurs paires de points quantiques ($102_{1-4}$) est modélisé en tant qu'une fonction à variable unique dans laquelle la variable est une combinaison linéaire des grilles virtuelles.

11. Ordinateur selon la revendication 9 ou 10, dans lequel les grilles virtuelles comportent une ou plusieurs grilles de barrières virtuelles pour commander des couplages de points quantiques ($102_{1-4}$) dans le réseau de points quantiques ($1300$) ; et/ou dans lequel les grilles virtuelles comportent une ou plusieurs grilles de plongeurs virtuelles pour commander des potentiels de points d'un ou plusieurs points quantiques ($102_{1-4}$) dans le réseau de points quantiques (1300).

**12.** Ordinateur selon l'une quelconque des revendications 9 à 11, dans lequel le couplage des au moins deux points quantiques ($102_{1-4}$) est au moins l'un parmi : un couplage de tunnel, un couplage de co-tunnelisation, un couplage d'échange et/ou un couplage capacitif.

**13.** Ordinateur selon l'une quelconque des revendications 9 à 12, dans lequel l'ordinateur est en outre configuré pour :

déterminer une matrice de diaphonie combinée sur la base de la matrice de diaphonie de potentiels de points et de la matrice de diaphonie de couplage, l'inverse de la matrice de diaphonie combinée définissant des grilles virtuelles améliorées en tant qu'une combinaison linéaire des tensions de grilles physiques pour une commande orthogonale des couplages des points quantiques ($102_{1-4}$) dans le réseau de points quantiques (1300) ; et facultativement
déterminer une combinaison linéaire de tensions de grilles physiques sur la base de l'inverse de la matrice de diaphonie combinée.

**14.** Ordinateur selon l'une quelconque des revendications 9 à 12, dans lequel la commande du couplage comporte en outre :

la détermination de l'inverse de la matrice de diaphonie de potentiels de points ;
la détermination d'un inverse de la matrice de diaphonie de couplage ; et
la détermination d'une combinaison linéaire de tensions de grilles physiques pour commander le couplage de points des au moins deux points quantiques ($102_{1-4}$) sur la base de l'inverse de la matrice de diaphonie de couplage et de l'inverse de la matrice de diaphonie de potentiels de points.

**15.** Produit programme informatique comprenant des parties de code logiciel qui, lorsqu'elles sont exécutées sur un ordinateur, réalisent les étapes du procédé selon l'une quelconque des revendications 1 à 8.

FIG. 1

FIG. 2

determining virtual gates $B', P'$ for the quantum dots based on first crosstalk contributions of physical gates $B, P$ to dot potentials of quantum dots in the quantum dot array, a virtual gate voltage defining a linear combination of physical gate voltages to be applied to the physical gates for controlling at least one dot potential of a quantum dot or for controlling a coupling of at least two quantum dots in the quantum dot array, while at least partially compensating dot potential crosstalk due to the first crosstalk contributions

302

determining second crosstalk contributions of the virtual gates to a coupling of at least two quantum dots in the quantum dot array, the determining including applying a voltage perturbation $\delta$ to at least one of the virtual gates and in response to the voltage perturbation $\delta$ measuring a change in of the coupling of the at least two quantum dots and fitting the change of the coupling to a function, preferably a linear function

304

determining enhanced virtual gates $B^\dagger, P^\dagger$ for the quantum dots based on the second crosstalk contributions, an enhanced virtual gate voltage defining a linear combination of the virtual gate voltages for controlling at least one dot potential or a coupling of at least two quantum dots in the quantum dot array, while at least partially compensating coupling crosstalk due to the second crosstalk contributions;

306

controlling the coupling of at least two quantum dots in the quantum dot array based on at least one of the enhanced virtual gates $B^\dagger, P^\dagger$, the controlling including using the at least one of the enhanced virtual gates to tune the coupling of the at least two quantum dots to a target value.

308

**FIG. 3**

FIG. 4

EP 4 094 203 B1

FIG. 5

**FIG. 6**

FIG. 7

804 determine crosstalk ratios for tunneling couplings

**802** target configuration and guess of tunnel coupling lever arms for $B'$

**806** select a(nother) tunnel coupling, $t_{ij}$

**808** determine a voltage perturbation, $\delta B'_{kl}$ for use in the differential method

apply perturbation $\delta B'_{kl}$ to $B'_{kl}$ and measure $\frac{\partial t_{ij}}{\partial B'_{kl}}$  **810**

**812** uncertainty $\frac{\partial t_{ij}}{\partial B'_{kl}}$ small enough?

Yes → **814** characterize crosstalk of $B'$ on $t_{ij}$ with the differential method

No → **811** update per-turbation $\delta B'_{kl}$

**816** crosstalk on all tunnel couplings characterized? — No / Yes

**818** place characterized crosstalk ratios into the crosstalk matrix

**820** define $B^\dagger$ based on the crosstalk matrix

**822** determine the increment in voltages, $\Delta B^\dagger$, for setting $t$ to the target values

**524** obtain the linear combination of physical gate voltages for changing $\Delta B^\dagger$ from the inverse matrix

**526** set all $t$ by applying physical gate voltages corresponding to $\Delta B^\dagger$

817 determine a crosstalk matrix relating $B^\dagger$ to physical gates P, B

811 orthogonal control of tunnel couplings

## FIG. 8

902    characterize crosstalk of B' on all tunnel couplings in one go, and then define $B^\dagger$

904    Set $t_{12}$ to the target value with $B^\dagger_{12}$

906    Set $t_{34}$ to the target value with $B^\dagger_{34}$

908    Set $t_{23}$ to the target value with $B^\dagger_{23}$

**FIG. 9**

FIG. 10

1102   $t_{12}$     $t_{23}$     $t_{34}$

Choose a first tunnel coupling, $t_{12}$ to
start the procedure

1104   $t_{12}$     $t_{23}$     $t_{34}$

Set $t_{12}$ to the target value with $B'_{12}$, and
then characterize crosstalk of B' on $t_{12}$.
Define B* based on the crosstalk

1108   $t_{12}$     $t_{23}$     $t_{34}$

Set $t_{34}$ to the target value with $B^*_{34}$, and
then characterize crosstalk of B* on $t_{34}$.
All the tunnel couplings have been set
in the target values, and $B^\dagger$ are defined.

1106   $t_{12}$     $t_{23}$     $t_{34}$

Set $t_{23}$ to the target value with $B^*_{23}$, and
then characterize crosstalk of B* on $t_{23}$.
Update B* based on the crosstalk

**FIG. 11**

FIG. 12

FIG. 13A

FIG. 13B

target 1400
configuration
and
guess of
tunnel coupling
lever arms
for $B'$

1404 determine crosstalk ratios for tunneling couplings

1401 All t high enough for the differential method?

Yes

No

1402 Apply step-wise tune-and-calibrate approach to tunnel couplings which are too low

1403

1406 select a(nother) tunnel coupling, $t_{ij}$

1408 determine a voltage perturbation, $\delta B'_{kl}$ for use in the differential method

1410 apply perturbation $\delta B'_{kl}$ to $B'_{kl}$ and measure $\dfrac{\partial t_{ij}}{\partial B'_{kl}}$

1412 uncertainty $\dfrac{\partial t_{ij}}{\partial B'_{kl}}$ small enough?

Yes

No

1411 update per-turbation $\delta B'_{kl}$

1414 characterize crosstalk of $B'$ on $t_{ij}$ with the differential method

1416 crosstalk on all tunnel couplings characterized?

No

Yes

1418 place characterized crosstalk ratios into the crosstalk matrix

1420 define $B^\dagger$ based on the crosstalk matrix

1422 determine the increment in voltages, $\Delta B^\dagger$, for setting $t$ to the target values

1424 obtain the linear combination of physical gate voltages for changing $\Delta B^\dagger$ from the inverse matrix

1426 set all $t$ by applying physical gate voltages corresponding to $\Delta B^\dagger$

1417 determine a crosstalk matrix relating $B^\dagger$ to physical gates P, B

1411 orthogonal control of tunnel couplings

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VAN DIEPEN, C. J. et al.** Automated tuning of inter-dot tunnel coupling in double quantum dots. *Applied Physics Letters,* 2018, vol. 113, 033101
- **MILLS, A. R. et al.** Computer-automated tuning procedures for semiconductor quantum dot arrays. *Applied Physics Letters,* 2019, vol. 115, 113501
- **HAIFENG QIAO.** *Coherent multi-spin exchange in a quantum-dot spin chain*
- **C. VOLK.** *Loading a quantum-dot based "Qubyte" register*

- **PETTA, J.R. et al.** Coherent manipulation of coupled electron spins in semiconductor quantum dots. *Science,* 2005, vol. 309, 2180-2184
- **OOSTERKAMP. T.H. et al.** Microwave spectroscopy of a quantum-dot molecule. *Nature,* 1998, vol. 395, 873
- **RUOYU LI et al.** A crossbar network for silicon quantum dot qubits. *Science Advances,* 2018, vol. 4 (7